# EUROPEAN PATENT SPECIFICATION

(11) **EP 4 167 463 B1**
(45) Date of publication and mention of the grant of the patent: **04.12.2024**
(21) Application number: 21936425.4
(22) Date of filing: 15.04.2021
(51) Int. Cl.: H02N 2/18

(54) **SELF-POWERED DEVICE**
SELBSTVERSORGENDE VORRICHTUNG
DISPOSITIF AUTO-ALIMENTÉ

(43) Date of publication of application: 19.04.2023
(73) Proprietor: Wu, Wenjing, Shenzhen, Guangdong 518000 (CN)
(72) Inventor: Wu, Wenjing, Shenzhen, Guangdong 518000 (CN)
(74) Representative: Puchberger & Partner Patentanwälte
(86) International application number: PCT/CN2021/087502
(87) International publication number: WO 2022/217543

(56) References cited:
- EP-A1- 4 178 099
- WO-A1-2021/051823
- CN-A- 102 185 520
- CN-A- 105 048 599
- CN-A- 110 400 453
- CN-A- 110 690 804
- CN-A- 111 919 376
- CN-U- 210 090 956
- CN-U- 212 137 521
- CN-U- 212 231 316
- US-A1- 2004 118 665
- US-A1- 2016 065 096
- US-A1- 2020 313 532

## Description

### TECHNICAL FIELD

The present application relates to the field of self-powered technologies, and more particularly to a self-powered device.

### BACKGROUND

Self-powered technology is a new type of power supply technology that converts oscillation energy or magnetic field energy or the like into electrical energy, thereby driving electronic devices with low power consumption to be operated. By virtue of the self-powered technology, zero power consumption can be effectively achieved, costs on assembling and usage are saved, and the environment is protected.

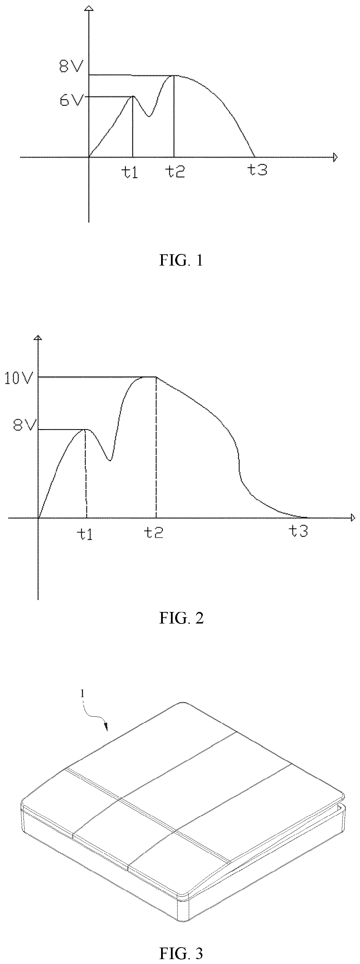

Currently, self-powered technology has been gradually applied to products such as switches, doorbells and remote controls of electronic devices, and a self-powered device disclosed in a Chinese invention patent publication No. CN111919376A. However, during a using process of the self-powered device, it is found that, the structure for accommodating piezoelectric patch is arranged on a bottom shell or a top shell, when the self-powered device is attached to a wall, or be placed on a desktop, or be assembled into a box or be held by hand, the power generations of the self-powered device are significantly different. The consistency of power supplying cannot be guaranteed. According to a research experiment, it is found that the root of the problem is that an oscillation mechanism is restricted by the bottom shell or the top shell. In the restricted state, a power waveform output of the self-generation device after bridge rectification is shown in FIG. 1, this restriction is related to the environment of placement, installation and use, and it is impossible to require users to use the self-powered device in constant environment in the process of actual use. WO 2021/051823A1 discloses a self-power generation module and a wireless control switch, the self-power generation module includes: a housing, a power generation mechanism, a driving arm and an elastic reset member; the power generation mechanism is located in the housing, the driving arm is pivotally connected to the housing and connected to the power generation mechanism, the driving arm is configured to interact with the elastic reset member and cause the power generation mechanism to generate electricity when rotating. The elastic reset member is located between the driving arm and the housing, and in the relaxed state of the elastic reset member, a gap is formed at least one of between a first elastic end and a pressureapplying surface and between a second elastic end and a pressure-bearing surface. The driving arm is not subject to a reverse elastic force of the elastic reset member in the initial state of being pressured, that is, in the initial state, it is not hindered by the elastic reset member, effectively reducing the initial operating force of the driving arm, so that the driving arm to which the self-power generation module is applied requires small operating force when being pressed. US 2020/313532A1 discloses a four-sided-synchronous-swing dual-mode broadband power generation device, comprising a fixing frame, a piezoelectric beam swing mechanism, and electromagnetic induction power generators. Four groups of straight piezoelectric beams and L-shaped piezoelectric beams are installed in a small space, therefore, a limited working space can be fully utilized, the working area can be reduced, and the requirements for development of a microelectromechanical system can be satisfied. Each L-shaped piezoelectric beam comprises a horizontal beam and a vertical beam, so that vibration in two directions can be implemented, therefore, the dynamic behavior of piezoelectric cantilevers is enriched, and the power generation efficiency of the system is improved. The straight piezoelectric beams and L-shaped piezoelectric beams have different lengths, so that energy of different swing frequencies can be effectively harvested, and the effective working frequency bandwidth can be broadened. The adjacent straight piezoelectric beams, L-shaped piezoelectric beams, and electromagnetic induction power generators constitute four groups of dual-mode piezoelectric electromagnetic composite power generation structures, effectively improving power generation. The four-sided-synchronous-swing dual-mode broadband power generation device can harvest energy inputted in the form of rotation from environment and currently can be applied to wind power generation, hydroelectric power generation, bicycle self-power supply, and other fields. US 2004/118665A1 discloses a keyboard including a plurality of keys, each key has a key top, a guiding structure that includes linking units pivotally movable in response to vertical motion of the key top, an elastic member to be pressed down by the vertical motion of the key top, and a contact which is operatively associated with the vertical motion of the key top. The guiding structure includes a common unit which is shared with all the other keys.

### SUMMARY

One objective of the present application is to provide a self-powered device, which aims to solve a technical problem that the vibration structure of the existing self-powered device is restricted by a bottom shell or a top shell.

In order to achieve the above-mentioned objective, a self-powered device is provided in the present application, the self-powered device includes a a triggering structure. The triggering structure includes a first lever structure, the first lever structure includes a first support part and a first triggering member, the first triggering member includes a first power part, a first resistance part and a first connection part. The first power part and the first resistance part are arranged on opposite sides of the first connection part respectively. The first connection part is rotatably connected to the first support part to form a first revolute. The self-powered device further includes: a bottom shell, the first support part is arranged on an inner wall of the bottom shell; and a top cover, the top cover and the bottom shell are enclosed to form a mounting cavity, the first triggering member and the self-generation structure are accommodated in the mounting cavity. The self-powered device further includes: a circuit board arranged on a surface of the first power part facing the top cover; and a first group of buttons. The first group of buttons includes a plurality of first buttons arranged to be spaced apart on the top cover, bottom ends the plurality of first buttons are abutted against the circuit board and are spaced at an equal distance from the first connection part.

The self-powered device further includes a self-generation structure arranged on the first resistance part.

When the first power part is driven by an external force to rotate around an axis of the first revolute and towards a side of the first support part, the first resistance part is rotated around the axis of the first revolute in a direction opposite to a rotation direction of the first power part, in order that the self-generation structure is triggered in a suspended state and generates electrical energy.

In one embodiment, a first force-bearing part is arranged on the first power part, the triggering structure further includes a second lever structure, the second lever structure includes a second support part and a second triggering member. The second support part is arranged on the first power part and is located at a one-half position of a power arm of the first force-bearing part, the second triggering member is accommodated in the mounting cavity, and the second triggering member includes a second power part, a second resistance part and a second connection part. The second power part and the second resistance part are located on opposite sides of the second connection part, respectively. The second force-bearing part is arranged on the second power part, the second resistance part is abutted against the top cover or the bottom shell so as to form a pivot point. The second connection part is rotatably connected to the second support part so as to form a second revolute, a power arm of the second force-bearing part is twice of a resistance arm of the second revolute in length.

In one embodiment, an avoidance groove is further arranged on the first power part. The avoidance groove penetrates through the first power part and is located between the first connection part and the first force-bearing part, and the second support part is formed on a groove wall of the avoidance groove adjacent to the first force-bearing part. The second resistance part is abutted against the top cover, and the second power part is positioned to correspond to the avoidance groove.

When the second force-bearing part is driven by an external force to approach towards a bottom wall of the bottom shell by rotating around the pivot point, the second revolute drives the first power part to rotate around the axis of the first revolute and towards the bottom wall of the bottom shell.

A distance of rotation of the first power part driven by the second force-bearing part is equal to a distance of rotation of the first power part driven by the first force-bearing part under a same magnitude of external force.

In one embodiment, an avoidance groove is further arranged on the first power part. The avoidance groove penetrates through the first power part and is located between the first connection part and the first force-bearing part, and the second support part is formed on a groove wall of the avoidance groove adjacent to the first force-bearing part; the second resistance part is abutted against the first power part and the top cover. The second power part is positioned to correspond to the avoidance groove, and a third force-bearing part is arranged on the second resistance part.

When the third force-bearing part is driven by an external force towards the bottom wall of the bottom shell, the second resistance part is pressed against the first power part and is rotated around the axis of the first revolute and towards the bottom wall of the bottom shell. When the second force-bearing part is driven by an external force to approach towards the bottom wall of the bottom shell around the pivot point, the second revolute drives the first power part to rotate around the axis of the first revolute and towards the bottom wall of the bottom shell.

A distance of rotation of the first power part driven by the third force-bearing part is equal to a distance of rotation of the first power part driven by the second force-bearing part under the same magnitude of external force.

In one embodiment, an avoidance groove is further arranged on the first power part. The avoidance groove penetrates through the first power part and is located between the first connection part and the first force-bearing part, and the second support part is formed on a groove wall of the avoidance groove adjacent to the first force-bearing part, the second resistance part penetrates through the avoidance groove and is abutted against the bottom shell.

When the second force-bearing part is driven by an external force to approach towards the first power part around the pivot point, the second revolute drives the first power part to rotate around the axis of the first revolute and towards the bottom wall of the bottom shell.

A distance of rotation of the first power part driven by the second force-bearing part is equal to a distance of rotation of the first power part driven by the first force-bearing part under the same magnitude of external force.

In one embodiment, a self-powered device is provided, the self-powered device includes:
a triggering structure, wherein the triggering structure includes a first lever structure, the first lever structure comprises a first support part and a first triggering member, the first triggering member comprises a first power part, a first resistance part and a first connection part, the first power part and the first resistance part are arranged on opposite sides of the first connection part respectively, the first connection part is rotatably connected to the first support part to form a first revolute; and
a self-generation structure arranged on the first resistance part;
wherein when the first power part is driven by an external force to rotate around an axis of the first revolute and towards a side of the first support part, the first resistance part is rotated around the axis of the first revolute in a direction opposite to a rotation direction of the first power part, in order that the self-generation structure is triggered in a suspended state and generates electrical energy;
the self-powered device further includes:
   a bottom shell, wherein the first support part is arranged on an inner wall of the bottom shell; and
   a top cover, wherein the top cover and the bottom shell are enclosed to form a mounting cavity, wherein the first triggering member and the self-generation structure are accommodated in the mounting cavity;
   a first force-bearing part is arranged on the first power part, the triggering structure further comprises a second lever structure, the second lever structure comprises a second support part and a second triggering member, the second support part is arranged on the first power part and is located at a one-half position of a power arm of the first force-bearing part, the second triggering member is accommodated in the mounting cavity, and the second triggering member includes a second power part, a second resistance part and a second connection part, wherein the second power part and the second resistance part are located on opposite sides of the second connection part, respectively; a second force-bearing part is arranged on the second power part, the second resistance part is abutted against the top cover or the bottom shell so as to form a pivot point, the second connection part is rotatably connected to the second support part so as to form a second revolute, a power arm of the second force-bearing part is twice of a resistance arm of the second revolute in length;
   the self-powered device further includes:
      a circuit board arranged on a surface of the second trigger element facing the top cover. A first end and a second end of the circuit board are abutted against the third force-bearing part and the second force-bearing part, respectively.

The self-powered device further includes a first group of buttons, the first group of buttons includes a plurality of first buttons which are arranged to be spaced apart on the top cover, bottom ends of the plurality of first buttons are abutted against the circuit board.

The self-powered device further includes a second group of buttons which are arranged to be spaced from the first group of buttons and are located on one side of the first group of buttons adjacent to the first support part. The second group of buttons includes a plurality of second buttons which are arranged to be spaced apart on the top cover, and bottom ends of the plurality of second buttons are abutted against the circuit board.

A spacing between the bottom ends of the plurality of first buttons and an edge of the first end of the circuit board is equal to a spacing between the bottom ends of the plurality of second buttons and an edge of the second end of the circuit board.

In one embodiment, a self-powered device is further provided, the self-powered device includes:
a triggering structure, wherein the triggering structure comprises a first lever structure, the first lever structure comprises a first support part and a first triggering member, the first triggering member comprises a first power part, a first resistance part and a first connection part, the first power part and the first resistance part are arranged on opposite sides of the first connection part respectively, the first connection part is rotatably connected to the first support part to form a first revolute; and
a self-generation structure arranged on the first resistance part;
wherein when the first power part is driven by an external force to rotate around an axis of the first revolute and towards a side of the first support part, the first resistance part is rotated around the axis of the first revolute in a direction opposite to a rotation direction of the first power part, in order that the self-generation structure is triggered in a suspended state and generates electrical energy;
the self-powered device further comprises:
   a bottom shell, wherein the first support part is arranged on an inner wall of the bottom shell; and
   a top cover, wherein the top cover and the bottom shell are enclosed to form a mounting cavity, wherein the first triggering member and the self-generation structure are accommodated in the mounting cavity;
   a first force-bearing part is arranged on the first power part, the triggering structure further comprises a second lever structure, the second lever structure comprises a second support part and a second triggering member, the second support part is arranged on the first power part and is located at a one-half position of a power arm of the first force-bearing part, the second triggering member is accommodated in the mounting cavity, and the second triggering member comprises a second power part, a second resistance part and a second connection part, wherein the second power part and the second resistance part are located on opposite sides of the second connection part, respectively; a second force-bearing part is arranged on the second power part, the second resistance part is abutted against the top cover or the bottom shell so as to form a pivot point, the second connection part is rotatably connected to the second support part so as to form a second revolute, a power arm of the second force-bearing part is twice of a resistance arm of the second revolute in length;
   an avoidance groove is further arranged on the first power part, wherein the avoidance groove penetrates through the first power part and is located between the first connection part and the first force-bearing part, and the second support part is formed on a groove wall of the avoidance groove adj acent to the first force-bearing part, the second resistance part penetrates through the avoidance groove and is abutted against the bottom shell;
   wherein when the second force-bearing part is driven by an external force to approach towards the first power part around the pivot point, the second revolute drives the first power part to rotate around the axis of the first revolute and towards the bottom wall of the bottom shell;
   a distance of rotation of the first power part driven by the second force-bearing part is equal to a distance of rotation of the first power part driven by the first force-bearing part under the same magnitude of external force;
   the self-powered device further includes a circuit board, a first end and a second end of the circuit board are abutted against the first force-bearing part and the second force-bearing part, respectively.

The self-powered device further includes a first group of buttons, the first group of buttons includes a plurality of first buttons arranged to be spaced apart on the top cover, and bottom ends of the plurality of first buttons are abutted against the circuit board.

The self-powered device further includes a second group of buttons arranged to be spaced from the first group of buttons and located on one side of the first group of buttons adjacent to the first support part. The second group of buttons includes a plurality of second buttons arranged to be spaced apart on the top cover, and bottom ends of the plurality of second buttons are abutted against the circuit board.

A spacing between the bottom ends of the plurality of first buttons and an edge of the first end of the circuit board is equal to a spacing between the bottom ends of the plurality of second buttons and an edge of the second end of the circuit board.

In one embodiment, the self-generation structure is a piezoelectric power generation structure.

In one embodiment, the self-generation structure is a magnet generator structure.

The beneficial effects of the self-powered device according to the embodiment of the present application are reflected in that, the first lever structure is used to trigger the self-generation structure, the first power part is used to receive an external force and drive the self-generation structure arranged on the first resistance part to be suspended, in order that the self-generation structure generates electrical energy in the suspended state. Thus, the restriction of the self-generation structure by the bottom shell or the top shell is avoided, and the technical problem that the oscillation structure of the existing self-generation device is restricted by the bottom shell or the top shell is solved, and the efficiency and the stability of the self-generation of the self-powered device are effectively improved.

### BRIEF DESCRIPTION OF THE DRAWINGS

In order to describe the embodiments of the present application more clearly, a brief introduction regarding the accompanying drawings that need to be used for describing the embodiments or existing technologies is given below.
FIG. 1 illustrates a waveform of a power output from the self-generation structure after bridge rectification in a restricted state;
FIG. 2 illustrates a waveform of the power output from the self-powered structure after bridge rectification in a suspended state.
FIG. 3 illustrates a three-dimensional schematic diagram of the self-generation structure according to the first embodiment of the present application;
FIG. 4 illustrates a schematic three-dimensional exploded view of a part of the self-powered device according to the first embodiment of the present application;
FIG. 5 illustrates a schematic sectional view of a middle part of the self-powered device according to the first embodiment of the present application;
FIG. 6 illustrates a schematic diagram of the self-powered device shown in FIG. 5, where the self-powered device is in a triggered state;
FIG. 7 illustrates a schematic three-dimensional exploded view of the self-powered structure according to the first embodiment of the present application;
FIG. 8 illustrates a schematic three-dimensional diagram of the self-powered structure according to the second embodiment, the third embodiment and the fourth embodiment of the present application;
FIG. 9 illustrates a schematic diagram of a relationship between force and force arm of the triggering structure according to the second embodiments, the third embodiment, and the fourth embodiment of the present application;
FIG. 10 illustrates a schematic three-dimensional exploded view of the self-powered device according to the second embodiment, which is outside the scope of the subject matter defined by the claims;
FIG. 11 illustrates a schematic diagram of a mid-sectional view of the self-powered device according to the second embodiment, which is outside the scope of the subject matter defined by the claims.
FIG. 12 is a schematic diagram of the self-powered device in the triggered state, as shown in FIG. 11;
FIG. 13 is a schematic three-dimensional exploded view of the self-powered device according to the third embodiment of the present application;
FIG. 14 is a schematic sectional view of a middle part of the self-powered device according to the third embodiment of the present application;
FIG. 15 is a schematic diagram of the self-powered device in the first triggered state, as shown in FIG. 14;
FIG. 16 is a schematic diagram of the self-powered device in the second triggered state, as shown in FIG. 14;
FIG. 17 is a schematic three-dimensional exploded view diagram of the self-powered device according to the fourth embodiment of the present application;
FIG. 18 is a schematic sectional view of a middle part of the self-powered device according to the fourth embodiment of the present application;
FIG. 19 is a schematic diagram of the self-powered device in the triggered state, as shown in FIG. 18;
FIG. 20 is a schematic three-dimensional diagram of the self-powered structure provided by the fifth embodiment of the present application; and
FIG. 21 is a schematic front view of the self-generation structure being in a nontriggered state according to the fifth embodiment of the present application.

### DETAILED DESCRIPTION OF THE EMBODIMENTS

In order to make the technical problems, the technical solutions and the beneficial effects of the present application be clearer and more understandable, the present application will be further described in detail below with reference to the embodiments.

It needs to be noted that, when one component is described to be "fixed to" or "arranged on" another component, this component may be directly or indirectly arranged on another component. When it is described that one component "is connected with" another component, this component may be directly or indirectly connected to the another component. Directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, and are only intended to describe the present application conveniently and are for the purpose of conciseness of the description, but should not be interpreted as indicating or implying that a device or a component indicated by the terms must have specific locations and be constructed and manipulated according to the specific locations. Therefore, these terms shouldn't be considered as limitation to the present application. In addition, terms such as "the first" and "the second" are only used for the purpose of illustration, and thus should not be considered as indicating or implying any relative importance, or implicitly indicating the plurality of indicated technical features. Thus, technical feature(s) restricted by "the first" or "the second" can explicitly or implicitly comprise one or more such technical feature(s). In the description of the present application, a term "a plurality of" has the meaning of at least two, unless otherwise there is additional explicit and specific limitation for the term of "a plurality of'.

### First embodiment

Referring to FIG. 3, FIG. 4, FIG. 5, FIG. 6 and FIG. 9 together, a self-powered device 1 provided by this embodiment includes a triggering structure and a self-generation structure 20. The triggering structure includes a first lever structure, the first lever structure includes a first support part 31 and a first triggering member 11, the first triggering member 11 includes a first power part 111, a first resistance part 112 and a first connection part 113, the first power part 111 and the first resistance part 112 are located on opposite sides of the first connection part 113, respectively. The first connection part 113 is rotatably connected to the first support part 31 so as to form a first revolute 110, and the self-generation structure 20 is arranged on the first resistance part 112. When the first power part 111 is driven by an external force to rotate around an axis of the first revolute 110 and towards a side of the first support part 31, the first resistance part 112 rotates around the axis of the first revolute 110 in a direction opposite to a rotation direction of the first power part 111, such that the self-generation structure 20 is caused to be triggered and generate electrical energy in a suspended state. It can be understood that the first revolute 110 is actually a pivot point of swing of the first triggering member 11.

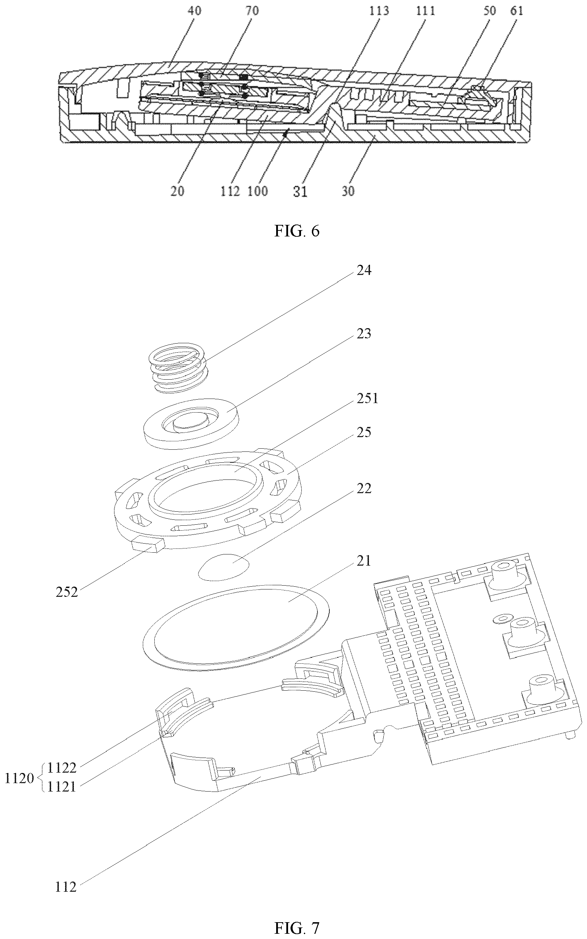

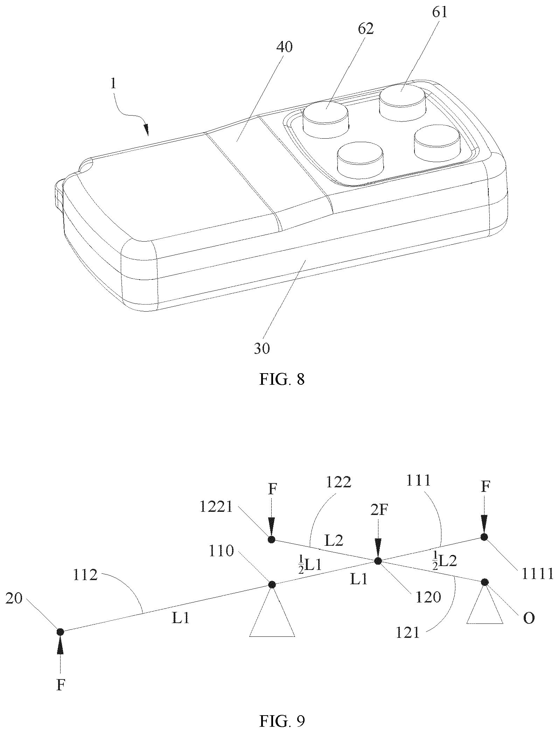

In particular, the first support 31 may be a convex rib having a rounded top, or be one or multiple projection(s) arranged to be spaced and having spherical crown shaped top(s), and the first connection 113 may be an arcuate recess matching with the top of the first support part 31. The first support part 31 is lapped or engaged with the top of the first connection part 113, so that the first connection part 113 is rotatably connected to the first support part 31 to form the first revolute 110, and the first triggering member 11 can be swung up and down by taking the first revolute 110 as a pivot point. In a practical application, when a user applies pressure to the first power part 111, as shown in FIG. 6 and FIG. 9, the first power part 111 will be rotated downwards around the axis of the first revolute 110, while the first resistance part 112 will be rotated upwards around the axis of the first revolute 110, such that the self-generation structure 20 is driven to be suspended and is triggered to generate electrical energy. In this embodiment, the self-generation structure 20 is a piezoelectric power generation structure, an alternating load is exerted on the piezoelectric patch through vibration, and the electrical energy is generated accordingly. From the waveform of the electrical energy output from the self-generation structure 20 after bridge rectification shown in Fig. 2, it can be seen that the electrical energy generated by the self-generation structure 20 in the suspended state is greater and more steadily than the electrical energy generated by the self-generation structure 20 in the non-suspended state (unrestricted state).

According to the self-powered device 1 provided in the present application, the first lever structure is used to trigger the self-generation structure 20, the first power part 111 receives the external force and drives the self-generation structure 20 arranged on the first resistance part 112 to be suspended, so that the self-generation structure 20 can generate electrical energy in the suspended state, the restriction of the self-generation structure 20 caused due to the bottom shell or the top shell is avoided, a problem that a vibration structure of the existing self-generation device is restricted by the bottom shell or the top shell is solved, and the efficiency and the stability of self-generation of the self-powered device 1 are effectively improved.

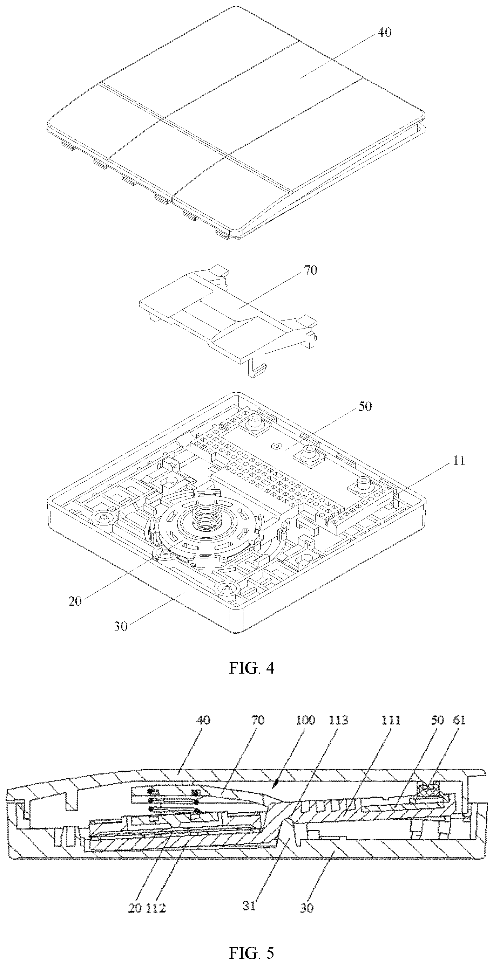

Furthermore, referring to FIGS. 4-6, in this embodiment, the self-powered device 1 further comprises a bottom shell 30 and a top cover 40. The first support part 31 is arranged on an inner wall of the bottom shell 30, the top cover 40 is enclosed with the bottom shell 30 to form a mounting cavity 100, and the first triggering member 11 and the self-generation structure 20 are accommodated in the mounting cavity 100. In particular, the first support part 31 and the bottom shell 30 are integrally formed, so that the production and the processing of the first support part 31 are facilitated. The top cover 40 and the bottom shell 30 are cooperated to enclose the first triggering member 11 and the self-generation structure 20 in the mounting cavity 100, so that the self-generation structure 20 can be better protected from being affected by external environment.

Furthermore, referring to FIG. 4, FIG. 5 and FIG. 6, in this embodiment, the self-powered device 1 further includes a circuit board 50 and a first group of buttons. The circuit board 50 is arranged on one surface of the first power part 111 facing the top cover 40. The first group of buttons includes a plurality of first buttons 61, the plurality of first buttons 61 are arranged on the top cover 40 at intervals, and bottom ends of the plurality of first buttons 61 are abutted against the circuit board 50 and are equally spaced from the first connection part 113. In particular, the self-powered device 1 can be a switch, and the circuit board 50 is fixed on the surface of the first power part 111 facing the top cover 40, and the bottom ends of the first buttons 61 are always abutted against the circuit board 50. The circuit board 50 is driven by each first button 61 to swing with the first power part 111 and does not obstruct the travel of the first buttons 61. In this way, the first button 61 can achieve turning on and turning off of the circuit board 50 at a stroke of 0.3 millimeter (mm) instead of using a high stroke switch with a stroke of 18 mm, so that a production cost of the self-powered device 1 is greatly reduced. Since the plurality of first buttons 61 are arranged at an equal distance from the first connection 113, such that the stroke of any one of the first buttons 61 can drive the self-powered structure 20 to rotate at the same distance, and the same self-generation effect can be achieved.

Furthermore, referring to FIG. 4, FIG. 6 and FIG. 7, in this embodiment, the self-generation structure 20 includes a piezoelectric patch 21, a metal dome 22, a mass block 23 and a spring 24. The specific structures of the piezoelectric patch 21, the metal dome 22, the mass block 23 and the spring 24 are as same as the structures disclosed in the published CN patent application (Publication No. CN111919376A). Moreover, the piezoelectric patch 21, the piezoelectric patch 21, the metal dome 22, the mass block 23 and the spring 24 are arranged coaxially and are laminated sequentially in an axial direction. The piezoelectric patch 21 is arranged on the surface of the first resistance part 112 facing the top cover 40, one end of the spring 24 is abutted against the mass block 23, and the other end of the spring 24 can be connected to an inner wall of the top cover 40 or a fixing member 70. When the self-powered device 1 includes the fixing member 70, the fixing member 70 is fixed to a bottom wall of the bottom shell 30, and a space for allowing the first resistance part 111 to swing around the first support part 31 in a reciprocating manner are formed between the fixing member 70 and the bottom shell 30. When the first power part 111 is forced to drive the first resistance part 112 to drive the self-power mechanism 20 to be lifted, the piezoelectric patch 21 is pressed against the metal dome metal dome 22 upwards, while the mass block 23 presses against the metal dome 22 downwards under an elastic force of the spring 24, and when the piezoelectric patch 21 and the mass block 23 are pressed against the metal dome metal dome 22, the piezoelectric patch 21 and the mass block 23 are pressed against the metal dome metal dome 22. When a clamping force of the piezoelectric patch 21 and the mass block 23 is greater than a triggering threshold, the metal dome 22 is deformed and is rebounded back to its original state when the first resistance part 112 is kept in the suspended state, thereby driving the mass block 23 to generate vibration and transferring the vibration to the piezoelectric patch 21, such that the piezoelectric patch 21 receives the alternating load and is deformed, and the mechanical energy generated due to the vibration can be converted into electrical energy. Since the whole vibration and power generation process occurs in the suspended state, so that the vibration can be avoided from being restricted by the bottom shell 30, the top cover 40 or the fixing member 70, and it is ensured that the vibration can maximize the electrical energy conversion efficiency of the piezoelectric patch 21, which facilitates enhancing the efficiency and the stability of the self-power generation of the self-power device 1.

In order to ensure the effective conversion of the vibration, the self-generation structure 20 may also include a clamping member 25, and an avoidance hole 251 for avoiding the mass block 23 is recessed on the middle part of the clamping member 25, and a plurality of positioning protrusions 252 are arranged at edges of the clamping member 25. The plurality of positioning protrusions 252 are arranged to be spaced apart around a peripheral wall of the clamping member 25. Moreover, a plurality of lug bosses 1120 are arranged on a surface of the first resistance part 112 facing the top cover 40, and the plurality of lug bosses 1120 are arranged to be spaced around the circumference of the piezoelectric patch 21. A step 1121 and a slot 1122 are arranged on each of the plurality of lug bosses 1120. When the self-generation structure 20 is assembled, the positioning protrusions 252 of the clamping member 25 are snap-fitted with the slots 1122 in a one-to-one correspondence manner, so that the clamping member 25 presses the edge of the piezoelectric patch 21 against the steps 1121, and the steps 1121 supports the piezoelectric patch 21 at a certain height, so that a space for allowing the deformation of the piezoelectric patch 21 due to the vibration is formed between the piezoelectric patch 21 and the surface of the first resistance part 112. Certainly, according to the specific situation and the requirement, in other embodiments of the present application, the self-generation structure 20 may also be a piezoelectric power generation structure having other structure.

### Second embodiment

The second embodiment is not covered by the subject matter defined by the claims.

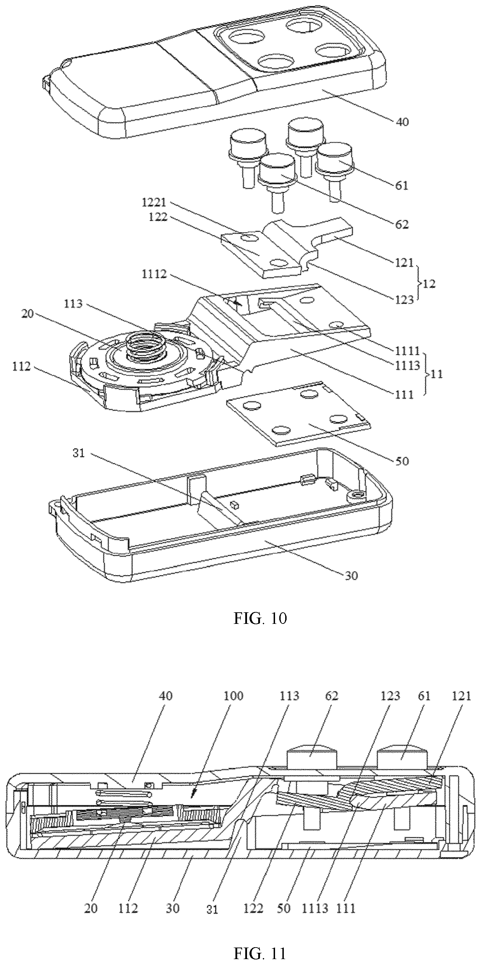

Referring to FIG. 8, FIG. 9, FIG. 10, FIG. 11, and FIG. 12 together, the self-powered device 1 provided in this embodiment is basically the same as the self-powered device 1 provided in the first embodiment, the difference between the self-powered device provided in this embodiment and the self-powered device 1 provided in the first embodiment is that, a first force-bearing part 1111 is arranged on the first power part 111, and the triggering structure further includes a second lever structure. The second lever structure includes a second support part 1113 and a second triggering member 12. The second support part 1113 is arranged on the first power part 111 and is located at a one-half of a power arm of the first force-bearing part 1111, the second triggering member 12 is accommodated in the mounting cavity 100. Moreover, the second triggering member 12 includes a second power part 122, a second resistance part 121 and a second connection part 123, the second power part 122 and the second resistance part 121 are located at opposite sides of the second connection part 123, respectively, and a second force-bearing part 12 is arranged on the second power part 122. The second resistance part 121 is connected to the top cover 40 to form a pivot point O, the second connection part 123 is rotatably connected to the second support part 1113 to form the second revolute 120, and a power arm of the second force-bearing part 1221 is twice of a resistance arm of the second revolute 120 in length. That is, the first lever structure and the second lever structure are rotatably connected to form a cross lever structure. In particular, referring to FIG. 9, assuming that the self-generation structure 20 is triggered to exert a pressure force having a value F on the first force-bearing part 1111, however, since the power arm L1 of the first force-bearing part 1111 is twice of a resistance arm 1/2L1 of the second revolute 120 in length in the first lever structure, thus, it needs to exert a pressure force having a value 2F on the second force-bearing part 1221 to reach the trigger condition of the self-generation structure 20. However, in the second lever structure, the pivot point of the second trigger element 12 is the pivot point O, a resistance arm 1/2L2 of the second revolute 120 which receives a reactive force is one half of the power arm L2 of the second force-bearing part 1221 in length. Thus, it only needs to exert a pressure force with the value F on the second force-bearing part 1221 to generate a pressure force with the value 2F at the second revolute 120 according to lever principle. That is, no matter the pressure force with the value F is exerted on the first force-bearing part 1111 or exerted on the second force-bearing part 1221, the self-generation structure 20 can be triggered to generate electrical energy.

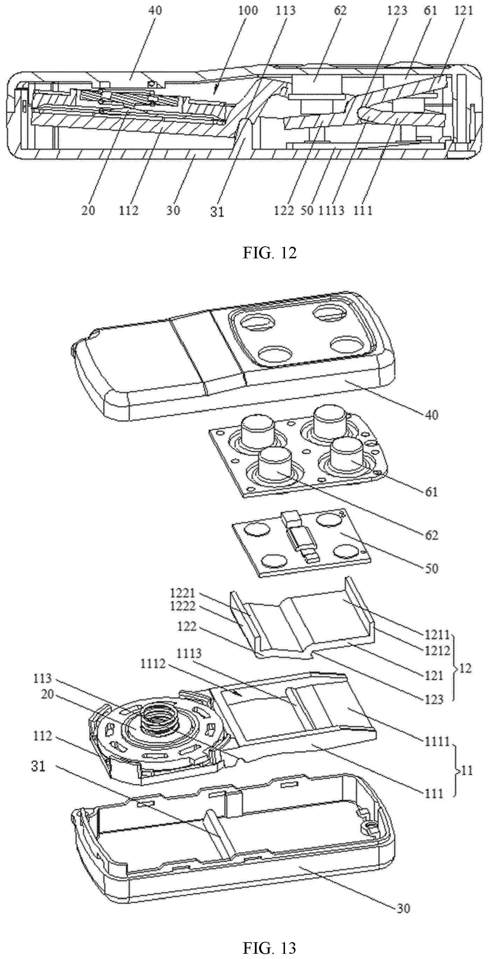

Furthermore, in this embodiment, an avoidance groove 1112 is arranged on the first power part 111, the avoidance groove 1112 penetrates through the first power part 111 and is located between the first connection part 113 and the first force-bearing part 1111, and the second support part 1113 is formed on the groove wall of the avoidance groove 1112 adjacent to the first force-bearing part 1111, the second power part 122 is positioned to correspond to the avoidance groove 1112. When the second force-bearing part 1221 is driven by an external force to approach towards the bottom wall of the bottom shell 30 around the pivot point O, as shown in FIG. 12, the second revolute 120 drives the first power part 111 to rotate around the axis of the first revolute 110 towards the bottom wall of the bottom shell 30, thereby driving the first resistance part 112 to approach towards the top cover 40 around the axis of the first revolute 110 and is in a suspended state. Under the same magnitude of external force, the distance of rotation of the first power part driven by the second force-bearing part 1221 is equal to the distance of rotation of the first power part 111 driven by the first force-bearing part 1111. In particular, the axis of the second revolute 120 is parallel to the axis of the first revolute 110. The second resistance part 121 is located on a top side of the first power part 111 and is arranged to be inserted in an interval between two adjacent first buttons 61. The second resistance part 121 can be swung in the interval in a reciprocating manner, and one end of the second resistance part 121 away from the second connecting section 123 is abutted against the top cover 40. The second power part 122 has an outer contour being adapted to an inner contour of the avoidance groove 1112, such that the second power part 122 can penetrate through the avoidance groove 1112 and is swung in a reciprocating manner. The second support part 1113 may be a convex rib having a rounded top or be one or more protrusion(s) arranged at intervals and having spherical-crown shaped top(s). The second connection part 123 is an arc-shaped groove adapted to the top of the second support part 1113, and is lapped with or snapped on the top of the second support part 1113. The second connection 123 may also be an arc-shaped groove, and the second connection part 123 may be a convex rib having a rounded top or be one or more projection(s) arranged at intervals and having spherical-crown shaped top(s), and the second support part 1113 is lapped with or snapped on the top of the second connection part 123, such that the second connection part 123 is rotatably connected to the second support part 1113 to form the second revolute 120. As shown in FIG. 12, the bottom ends of the plurality of first buttons 61 are pierced on the first force-bearing part 1111, and end surfaces of the bottom ends of the plurality of first buttons 61 are exposed on the bottom side of the first power part 111. When a first external force is applied to one first button 61 to drive the first power part 111 to rotate downwards at a first distance, the end surface of the bottom end of the first button 61 abuts against the circuit board 50. The bottom ends of the plurality of second buttons 62 are pierced on the second force-bearing part 1221, and end surfaces of the bottom ends of the plurality of second buttons 62 are exposed on a bottom side of the second power part 122. When a second external force is applied to one second button 62 to drive the second power part 122 to rotate downwards at a second distance, the bottom end of the second button 62 abuts against the circuit board 50. If the magnitude of the second external force is the same as the magnitude of the first external force, the second distance is the same as the first distance. That is, in practical application, the first buttons 61 and the second buttons 62 can trigger the self-generation structure 20 with the same magnitude of pressing force and the same stroke. No matter the user triggers the self-generation structure 20 by pressing the first buttons 61 or the second buttons 62, a result of different strokes and different power generations of the self-generation structure 20 would not occur, although the distance between the first buttons 61 and the first support part 31 and the distance between the second buttons 62 and the first support part 31 are different. The self-powered device is in better conformity with user's usage habits and facilitates improving the user's experience.

### Third embodiment

Referring to FIG. 8, FIG. 9, FIG. 13 and FIG. 16 together, the self-powered device 1 provided in this embodiment is basically the same as the self-powered device 1 provided in the first embodiment, the difference between the self-powered device 1 provided in this embodiment and the self-powered device 1 provided in the first embodiment is that, a first force-bearing part 1111 is arranged on the first power part 111, and the triggering structure further includes a second lever structure, and the second lever structure includes a second support part 1113 and a second triggering member 12. The second support part 1113 is arranged on the first power part 111 and is located at a one-half of a power arm of the first force-bearing part 1111. The second triggering member 12 is accommodated in the mounting cavity 100, and the second triggering member 12 includes a second power part 122, a second resistance part 121 and a second connection part 123. The second power part 122 and the second resistance part 121 are located on opposite sides of the second connection part 123, respectively. Moreover, a second force-bearing part 1221 is arranged on the second power part 122, and the second resistance part 121 is abutted against the top cover 40 to form a pivot point O. The second connection part 123 is rotatably connected to the second support part 1113 to form a second revolute 120. The power arm of the second force-bearing part 1221 is twice of a resistance arm of the second revolute 120 in length. That is, the first lever structure and the second lever structure are rotatably connected to form a cross lever structure. Referring to FIG. 9, assuming that the self-generation structure 20 is triggered to exert a pressure force having a value F on the first force-bearing part 1111, however, since the power arm L1 of the first force-bearing part 1111 is twice of a resistance arm 1/2L1 of the second revolute 120 in length in the first lever structure, thus, it needs to exert a pressure force having a value 2F on the second force-bearing part 1221 to reach the trigger condition of the self-generation structure 20. However, in the second lever structure, the pivot point of the second trigger element 12 is the pivot point O, a resistance arm 1/2L2 of the second revolute 120 which receives a reactive force is one half of the power arm L2 of the second force-bearing part 1221 in length. Thus, it only needs to exert a pressure force with the value F on the second force-bearing part 1221 to generate a pressure force with the value 2F at the second revolute 120 according to lever principle. That is, no matter the pressure force with the value F is exerted on the first force-bearing part 1111 or exerted on the second force-bearing part 1221, the self-generation structure 20 can be triggered to generate electrical energy.

Furthermore, in this embodiment, in addition to the circuit board 50 and the first group of buttons, the self-powered device 1 further includes a second group of buttons. The circuit board 50 is arranged on the surface of the second triggering member 12 facing the top cover 40, the second group of buttons is spaced apart from the first group of buttons, and the second group of buttons is located on one side of the first group of buttons adjacent to the first support part 31. The second group of buttons includes a plurality of second buttons arranged to be spaced apart on the top cover 40, the bottom ends of the first buttons 61 and the bottom ends of the second button 62 are respectively abutted against the circuit board 50. Thus, more control functions can be achieved by the self-powered device 1 through the matching of the circuit board 50, the first group of buttons and the second group of buttons. The self-powered device 1 may be a remote control.

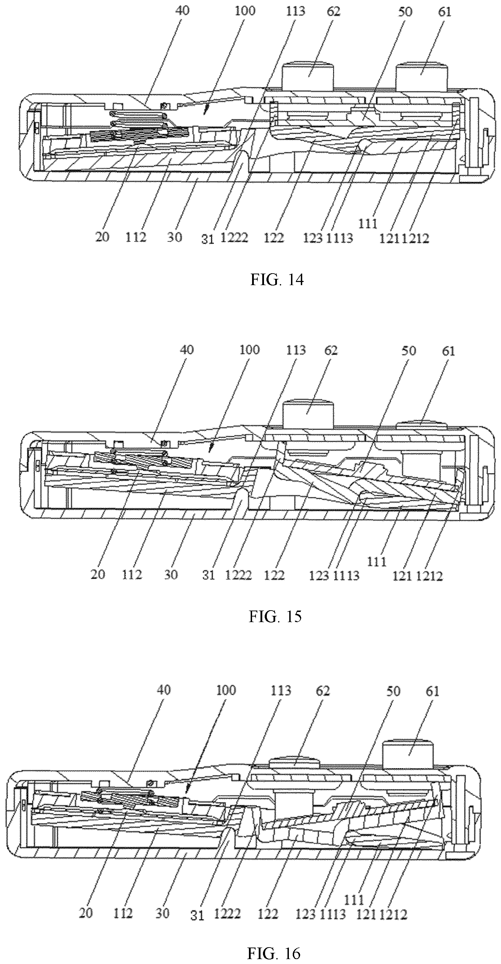

Furthermore, in this embodiment, an avoidance groove 1112 is further arranged on the first power part 111, the avoidance groove 1112 penetrates through the first power part 111 and is located between the first connection part 113 and the first force-bearing part 1111, and a second support part 1113 is arranged on one side of the avoidance groove 1112 adjacent to the first force-bearing part 1111. The second resistance part 121 is respectively abutted against the first power part 1111 and the top cover 40. The position of the second power part 122 corresponds to the position of the avoidance groove 1112, and a third force-bearing part 1211 is arranged on the second resistance part 121. When the third force-bearing part 1211 is driven towards the bottom wall of the bottom shell 30 by an external force, as shown in FIG. 15, the second resistance part 121 will be pressed against the first power part 111 to enable the first power part 111 to rotate around the axis of the first revolute 110 towards the bottom wall of the bottom shell 30. When the second force-bearing part 1221 is driven to approach the bottom wall of the bottom shell 30 around the pivot point O, as shown in FIG. 16, the second revolute 120 will drive the first power part 111 to rotate around the axis of the first revolute 110 and towards the bottom wall of the bottom shell 30. It can be understood that one end of the second resistance part 121 away from the second connection part 123 is abutted against the top cover 40 and forms the pivot point O. Under the same magnitude of external force, the distance of rotation of the first power part 111 driven by the third force-bearing part 1211 is equal to the distance of rotation of the first power part 111 driven by the second force-bearing part 1221. In particular, the second triggering member 12 is located on a top side of the first triggering member 11, and the position of the third force-bearing part 1211 corresponds to the position of the first force-bearing part 1111. The second power part 122 has an outer contour being adapted to an inner contour of the avoidance groove 1112, such that the second power part 122 can penetrate through the avoidance groove 1112 and swing in a reciprocating manner. The second support part 1113 may be a convex rib having a rounded top or be one or more protrusion(s) arranged at intervals and having spherical-crown shaped top(s). The second connection part 123 is an arc-shaped groove adapted to the top of the second support part 1113, and is lapped with or snapped on the top of the second support part 1113. The second connection 123 may also be an arc-shaped groove, and the second connection part 123 may be a convex rib having a rounded top, or be one or more projection(s) arranged at intervals and having spherical-crown shaped top(s), and the second support part 1113 is lapped with or snapped on the top of the second connection part 123, such that the second connection part 123 is rotatably connected to the second support part 1113 to form the second revolute 120. One end of the circuit board 50 away from the first support part 31 is the first end, the other end of the circuit board 50 adjacent to the first support part 31 is the second end, the first end and the second end of the circuit board 50 are abutted against the third force-bearing part 1211 and the second force-bearing part 1221, respectively. The spacing between a bottom end of each first button 61 and an edge of the first end of the circuit board 50 is equal to a spacing between a bottom end of each second button 62 and an edge of the second end of the circuit board 50. When either of the first buttons 61 or either of the second buttons 62 is pressed by the pressures with the same magnitude, the distances of downward rotations of the first power part 111 are equal. That is, in practical application, the first buttons 61 and the second buttons 62 can trigger the self-generation structure 20 with the same magnitude of pressing force and the same stroke. No matter the user triggers the self-generation structure 20 by pressing the first buttons 61 or the second buttons 62, a result of different strokes and different power generations of the self-generation structure 20 would not occur, although the distance between the first buttons 61 and the first support part 31 and the distance between the second buttons 62 and the first support part 31 are different. The self-powered device 1 is in better conformity with user's usage habits and facilitates improving the user's experience.

Furthermore, in this embodiment, a first flange 1212 is formed on an edge of the second resistance part 121 away from the second connection part 123, while a second flange 1222 is formed on an edge of the second power part 122 away from the second connection part 123, the first flange 1212 and the second flange 1222 are respectively abutted against the top cover 40, an accommodation space is formed between the first flange 1212 and the second flange 1222, and the circuit board 50 is accommodated in the accommodation space. In particular, the first flange 1212 is perpendicular to a surface of the third force-bearing part 1211 facing the top cover 40, the second flange 1222 is perpendicular to a surface of the second force-bearing part 1221 facing the top cover 40, and the first flange 1212 and the second flange 1222 are arranged to face the same side and are parallel to each other. A height of projection of the first flange 1212 is equal to a height of projection of the second flange 1222, and is greater than or equal to a thickness of the circuit board 50, so that the circuit board 50 can be avoided from being directly contacted with an inner wall of the top cover 40, and the circuit board 50 is effectively protected.

### Fourth embodiment

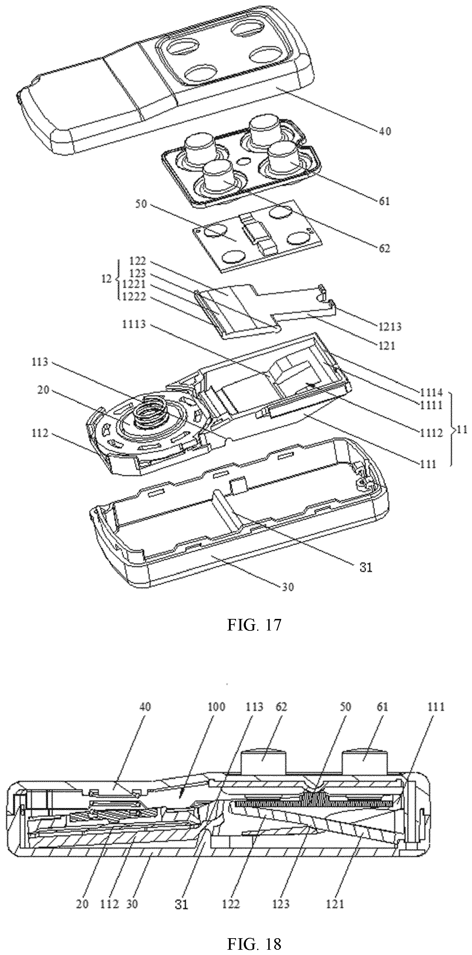

Referring to FIG. 8, FIG. 9, FIG. 17, FIG. 18 and FIG. 19 together, a first force-bearing part 1111 is arranged on the first power part 111, and the triggering structure further includes a second lever structure, and the second lever structure includes a second support part 1113 and a second triggering member 12. The second support part 1113 is arranged on the first power part 111 and is located at a one-half of a power arm of the first force-bearing part 1111. The second triggering member 12 is accommodated in the mounting cavity 100, and the second triggering member 12 includes a second power part 122, a second resistance part 121 and a second connection part 123. The second power part 122 and the second resistance part 121 are located on opposite sides of the second connection part 123, respectively. Moreover, a second force-bearing part 1221 is arranged on the second power part 122, and the second resistance part 121 is abutted against the top cover 40 to form a pivot point O. The second connection part 123 is rotatably connected to the second support part 1113 to form a second revolute 120. The power arm of the second force-bearing part 1221 is twice of a resistance arm of the second revolute 120 in length. That is, the first lever structure and the second lever structure are rotatably connected to form a cross lever structure. Referring to FIG. 9, assuming that the self-generation structure 20 is triggered to exert a pressure force having a value F on the first force-bearing part 1111, however, since the power arm L1 of the first force-bearing part 1111 is twice of a resistance arm 1/2L1 of the second revolute 120 in length in the first lever structure, thus, it needs to exert a pressure force having a value 2F on the second force-bearing part 1221 to reach the trigger condition of the self-generation structure 20. However, in the second lever structure, the pivot point of the second trigger element 12 is the pivot point O, a resistance arm 1/2L2 of the second revolute 120 which receives a reactive force is one half of the power arm L2 of the second force-bearing part 1221 in length. Thus, it only needs to exert a pressure force with the value F on the second force-bearing part 1221 to generate a pressure force with the value 2F at the second revolute 120 according to lever principle. That is, no matter the pressure force with the value F is exerted on the first force-bearing part 1111 or exerted on the second force-bearing part 1221, the self-generation structure 20 can be triggered to generate electrical energy.

Furthermore, in this embodiment, in addition to the circuit board 50 and the first group of buttons, the self-powered device 1 further includes a second group of buttons, the circuit board 50 is arranged on a surface of the second triggering member 12 facing the top cover 40, the second group of buttons is spaced apart from the first group of buttons, and the second group of buttons is located on one side of the first group of buttons adjacent to the first support part 31. The second group of buttons includes a plurality of second buttons, and a plurality of second buttons 62 are arranged to be spaced on the top cover 40, and the bottom ends of the first buttons61 and the bottom ends of the second buttons 62 are respectively abutted against the circuit board 50. Thus, more control functions can be achieved by the self-powered device 1 through the matching of the board 50, the first group of buttons and the second group of buttons. The self-powered device 1 may be a remote control.

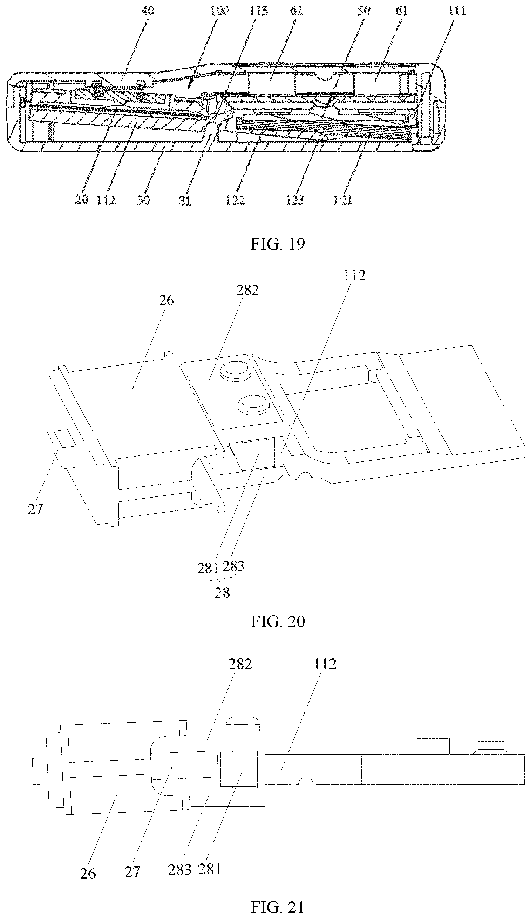

Furthermore, in this embodiment, an avoidance groove 1112 is further arranged on the first power part 111, the avoidance groove 1112 penetrates through the first power part 111 and is located between the first connection part 113 and the first force-bearing part 1111, and the second support part 1113 is formed on the groove wall of the avoidance groove 1112 adjacent to the first force-bearing part 1111, the second power part 122 is positioned to correspond to the avoidance groove 1112, the second resistance part 12 penetrates through the avoidance groove 1112 and is abutted against the bottom shell 30 to form a pivot point O. When the second force-bearing part 1221 is driven by an external force to approach towards the bottom wall of the bottom shell 30 around the pivot point O, as shown in FIG. 19, the second revolute 120 drives the first power part 111 to rotate around the axis of the first revolute 110 and towards the bottom wall of the bottom shell 30, thereby driving the first resistance part 112 to approach towards the top cover 40 around the axis of the first revolute 110, and is in a suspended state. Under the same magnitude of external force, the distance of rotation of the first power part driven by the second force-bearing part 1221 is equal to the distance of rotation of the first power part 111 driven by the first force-bearing part 1111. In particular, the axis of the second revolute 120 is parallel to the axis of the first revolute 110. The second resistance part 121 is located on a top side of the first power part 111, a width of the second resistance part 121 is adaptive to a width of the avoidance groove 1112, the second resistance part 121 penetrates through the avoidance groove 1112 and is exposed at the bottom side of the first power part 111. Furthermore, one end of the second resistance part 121 away from the second connection part 123 is provided with a limiting protrusion 1213, an inner surface of a side wall of the bottom shell 30 is provided with a hook 32, the limiting protrusion 1213 is abutted against the hook 32 to form a hinge, the pivot point O is formed on the hook 32. The second connection 123 may be an arc-shaped groove, and the second connection part 123 may be a convex rib having a rounded top or be one or more projection(s) arranged at intervals and having spherical-crown shaped top(s), and the second support part 1113 is lapped with or snapped on the top of the second connection part 123. The second support part 1113 may also be a convex rib having a rounded top or be one or more protrusion(s) arranged at intervals and having spherical-crown shaped top(s), the second connection part 123 is an arc-shaped groove adapted to the top of the second support part 1113, and the second connection part 123 is lapped with or snapped on the top of the second support part 1113, such that the second connection part 123 is rotatably connected to the second support part 1113 to form the second revolute 120. One end of the circuit board 50 away from the first support part 31 is the first end, the other end of the circuit board 50 adjacent to the first support part 31 is the second end, the first end and the second end of the circuit board 50 are abutted against the first force-bearing part 1111 and the second force-bearing part 1221, respectively. The spacing between a bottom end of each first button 61 and an edge of the first end of the circuit board 50 is equal to a spacing between a bottom end of each second button 62 and an edge of the second end of the circuit board 50. When either of the first buttons 61 or either of the second buttons 62 is pressed by the pressures with the same magnitude, the distances of downward rotations of the first power part 111 are equal. That is, in practical application, the first buttons 61 and the second buttons 62 can trigger the self-generation structure 20 with the same magnitude of pressing force and the same stroke. No matter the user triggers the self-generation structure 20 by pressing the first buttons 61 or the second buttons 62, a result of different strokes and different power generations of the self-generation structure 20 would not occur, although the distance between the first buttons 61 and the first support part 31 and the distance between the second buttons 62 and the first support part 31 are different. The self-powered device 1 is in better conformity with user's usage habits and facilitates improving the user's experience.

Furthermore, in this embodiment, a second flange 1222 is formed on an edge of the second power part 121 away from the second connection part 123, while a third flange 1114 is formed on an edge of the first power part 122 away from the first connection part 113, the second flange 1222 and the third flange 1114 are respectively abutted against the top cover 40, an accommodation space is formed between the second flange 1222 and the third flange 1114, and the circuit board 50 is accommodated in the accommodation space. In particular, the second flange 1222 is perpendicular to a surface of the second force-bearing part 1221 facing the top cover 40, the third flange 1114 is perpendicular to a surface of the first force-bearing part 1111 facing the top cover 40, and the second flange 1222 and the third flange 1114 are arranged to face the same side and are parallel to each other. A height of projection of the second flange 1222 is equal to a height of projection of the third flange 1114, and is greater than or equal to a thickness of the circuit board 50, so that the circuit board 50 can be avoided from being directly contacted with an inner wall of the top cover 40, and the circuit board 50 is effectively protected.

### Fifth embodiment

Referring to FIG. 20 and FIG. 21 together, the self-powered device 1 provided in this embodiment is basically the same as the self-powered device 1 provided in the first embodiment, the difference between the self-powered device 1 provided in this embodiment and the self-powered device 1 provided in the first embodiment is that, the self-powered structure 20 is a magneto structure. In particular, the self-generation structure 20 includes a magnetic conductivity assembly 26, a sensing assembly 27 and a magnetic assembly 28. The magnetic conductivity assembly 26 is arranged on a bottom wall of the bottom shell 30, the sensing assembly 27 includes a magnetic core and a coil surrounding the magnetic core. A first end of the magnetic core is connected to the magnetic conductivity assembly 26, the magnetic assembly 28 is arranged on the first resistance part 112. The magnetic assembly includes a magnet 281, a first magnetic conductivity piece 282 and a second magnetic conductivity piece 283, the first magnetic conductivity piece 282 is arranged to be opposite to the second magnetic conductivity piece 283, and the first magnetic conductivity piece 282 is in contact with a first magnetic pole of the magnet 281, the second magnetic conductivity piece 283 is in contact with a second magnetic pole of the magnet 281, the first magnetic conductivity piece 282 or the second magnetic conductivity piece 283 are selectively contacted with the second end of the magnetic core of the sensing assembly 27. When the first magnetic conductivity piece 282 is in contact with the second end of the magnetic core of the sensing assembly 27 283, the second magnetic conductivity piece 283 is in contact with the magnetic conductivity assembly 26, the magnet 281 forms a first magnetic circuit through the first magnetic conductivity piece 282, the magnetic core of the sensing assembly 27, the magnetic conductivity assembly 26 and the second magnetic conductivity piece 283. Moreover, the magnetic core of the sensing assembly 27 has a first magnetic induction line direction. When the second magnetic conductivity piece 283 is in contact with the second end of the magnetic core of the sensing assembly 27, the first magnetic conductivity piece 282 is in contact with the magnetic conductivity assembly 26, a second magnetic circuit is formed by the magnet 281 through the first magnetic conductivity piece 282, the magnetic conductivity assembly 26, the magnetic core of the sensing assembly 27, and the second magnetic conductivity piece 283. Moreover, the magnetic core of the sensing assembly 27 has a second magnetic induction line direction, and the first magnetic induction line direction is opposite to the second magnetic induction line direction, such that magnetic induction line directions are changed during a reciprocal swing of the first resistance part 112, the magnetic flux in the coil is changed in order that mechanical energy is converted into electrical energy. Certainly, according to the specific situation and requirement, in other embodiments of the present application, the self-generation structure 20 may also be a magnet generator structure having other structure.

## Claims

1. A self-powered device (1), comprising:
a triggering structure, wherein the triggering structure comprises a first lever structure, the first lever structure comprises a first support part (31) and a first triggering member (11), the first triggering member (11) comprises a first power part (111), a first resistance part (112) and a first connection part (113), the first power part (111) and the first resistance part (112) are arranged on opposite sides of the first connection part (113) respectively, the first connection part (113) is rotatably connected to the first support part (31) to form a first revolute (110);
a self-generation structure (20) arranged on the first resistance part (112),
wherein when the first power part (111) is driven by an external force to rotate around an axis of the first revolute (110) and towards a side of the first support part (31), the first resistance part (112) is rotated around the axis of the first revolute (110) in a direction opposite to a rotation direction of the first power part (111), in order that the self-generation structure (20) is triggered in a suspended state and generates electrical energy;
a bottom shell (30), wherein the first support part (31) is arranged on an inner wall of the bottom shell (30); and
a top cover (40), wherein the top cover (40) and the bottom shell (30) are enclosed to form a mounting cavity (100), wherein the first triggering member (11) and the self-generation structure (20) are accommodated in the mounting cavity (100),
**characterized in that** the self-powered device (1) further comprises:
a circuit board (50) arranged on a surface of the first power part (111) facing the top cover (40); and
a first group of buttons, wherein the first group of buttons comprises a plurality of first buttons (61), the plurality of first buttons (61) are arranged to be spaced apart on the top cover (40), and bottom ends of the plurality of first buttons (61) are abutted against the circuit board (50) and are spaced at an equal distance from the first connection part (113).

2. The self-powered device (1) according to claim 1, wherein a first force-bearing part (1111) is arranged on the first power part (111), the triggering structure further comprises a second lever structure, the second lever structure comprises a second support part (1113) and a second triggering member (12), the second support part (1113) is arranged on the first power part (111) and is located at a one-half position of a power arm of the first force-bearing part (1111), the second triggering member (12) is accommodated in the mounting cavity (100), and the second triggering member (12) comprises a second power part (122), a second resistance part (121) and a second connection part (123), wherein the second power part (122) and the second resistance part (121) are located on opposite sides of the second connection part (123), respectively; a second force-bearing part (1221) is arranged on the second power part (122), the second resistance part (121) is abutted against the top cover (40) or the bottom shell (30) so as to form a pivot point (O), the second connection part (123) is rotatably connected to the second support part (1113) so as to form a second revolute (120), a power arm of the second force-bearing part (1221) is twice of a resistance arm of the second revolute (120) in length.

3. The self-powered device (1) according to claim 2, wherein an avoidance groove (1112) is further arranged on the first power part (111), wherein the avoidance groove (1112) penetrates through the first power part (111) and is located between the first connection part (113) and the first force-bearing part (1111), and the second support part (1113) is formed on a groove wall of the avoidance groove (1112) adjacent to the first force-bearing part (1111), the second resistance part (121) is abutted against the top cover (40), and the second power part (122) is positioned to correspond to the avoidance groove (1112);
wherein when the second force-bearing part (1221) is driven by an external force to approach towards a bottom wall of the bottom shell (30) by rotating around the pivot point (O), the second revolute (120) drives the first power part (112) to rotate around the axis of the first revolute (110) and towards the bottom wall of the bottom shell (30);
a distance of rotation of the first power part (111) driven by the second force-bearing part (1221) is equal to a distance of rotation of the first power part (111) driven by the first force-bearing part (1111) under a same magnitude of external force.

4. The self-powered device (1) according to claim 2, wherein an avoidance groove (1112) is further arranged on the first power part (111), the avoidance groove (1112) penetrates through the first power part (111) and is located between the first connection part (113) and the first force-bearing part (1111), and the second support part (1113) is formed on a groove wall of the avoidance groove (1112) adjacent to the first force-bearing part (1111); the second resistance part (121) is abutted against the first power part (111) and the top cover (40), the second power part (122) is positioned to correspond to the avoidance groove (1112), and a third force-bearing part (1211) is arranged on the second resistance part (121);
wherein when the third force-bearing part (1211) is driven by an external force towards the bottom wall of the bottom shell (30), the second resistance part (121) is pressed against the first power part (111) and is rotated around the axis of the first revolute (110) and towards the bottom wall of the bottom shell (30); when the second force-bearing part (1221) is driven by an external force to approach towards the bottom wall of the bottom shell (30) around the pivot point (O), the second revolute (120) drives the first power part (111) to rotate around the axis of the first revolute (110) and towards the bottom wall of the bottom shell (30);
a distance of rotation of the first power part (111) driven by the third force-bearing part (1221) is equal to a distance of rotation of the first power part (111) driven by the second force-bearing part (1221) under the same magnitude of external force.

5. The self-powered device (1) according to claim 2, wherein an avoidance groove (1112) is further arranged on the first power part (111), wherein the avoidance groove (1112) penetrates through the first power part (111) and is located between the first connection part (113) and the first force-bearing part (1111), and the second support part (1113) is formed on a groove wall of the avoidance groove (1112) adjacent to the first force-bearing part (1111), the second resistance part (121) penetrates through the avoidance groove (1112) and is abutted against the bottom shell (30);
wherein when the second force-bearing part (1221) is driven by an external force to approach towards the first power part (113) around the pivot point (O), the second revolute (120) drives the first power part (113) to rotate around the axis of the first revolute (110) and towards the bottom wall of the bottom shell (30);
a distance of rotation of the first power part (113) driven by the second force-bearing part (1221) is equal to a distance of rotation of the first power part (113) driven by the first force-bearing part (1111) under the same magnitude of external force.

6. A self-powered device (1), comprising:
a triggering structure, wherein the triggering structure comprises a first lever structure, the first lever structure comprises a first support part (31) and a first triggering member (11), the first triggering member (11) comprises a first power part (111), a first resistance part (112) and a first connection part (113), the first power part (111) and the first resistance part (112) are arranged on opposite sides of the first connection part (113) respectively, the first connection part (113) is rotatably connected to the first support part (31) to form a first revolute (110);
a self-generation structure (20) arranged on the first resistance part (112),
wherein when the first power part (111) is driven by an external force to rotate around an axis of the first revolute (110) and towards a side of the first support part (31), the first resistance part (112) is rotated around the axis of the first revolute (110) in a direction opposite to a rotation direction of the first power part (111), in order that the self-generation structure (20) is triggered in a suspended state and generates electrical energy;
a bottom shell (30), wherein the first support part (31) is arranged on an inner wall of the bottom shell (30); and
a top cover (40), wherein the top cover (40) and the bottom shell (30) are enclosed to form a mounting cavity (100), wherein the first triggering member (11) and the self-generation structure (20) are accommodated in the mounting cavity (100),
wherein
a first force-bearing part (1111) is arranged on the first power part (111), the triggering structure further comprises a second lever structure, the second lever structure comprises a second support part (1113) and a second triggering member (12), the second support part (1113) is arranged on the first power part (111) and is located at a one-half position of a power arm of the first force-bearing part (1111), the second triggering member (12) is accommodated in the mounting cavity (100), and the second triggering member (12) comprises a second power part (122), a second resistance part (121) and a second connection part (123), wherein the second power part (122) and the second resistance part (121) are located on opposite sides of the second connection part (123), respectively; a second force-bearing part (1221) is arranged on the second power part (122), the second resistance part (121) is abutted against the top cover (40) or the bottom shell (30) so as to form a pivot point (O), the second connection part (123) is rotatably connected to the second support part (1113) so as to form a second revolute (120), and
a power arm of the second force-bearing part (1221) is twice of a resistance arm of the second revolute (120) in length,
**characterized in that** the self-powered device further comprises:
a circuit board (50) arranged on a surface of the second trigger element (12) facing the top cover (40), wherein a first end and a second end of the circuit board (50) are abutted against the third force-bearing part (1211) and the second force-bearing part (1221), respectively;
a first group of buttons, wherein the first group of buttons comprises a plurality of first buttons (61) which are arranged to be spaced apart on the top cover (40), and
bottom ends of the plurality of first buttons (61) are abutted against the circuit board (50); and
a second group of buttons which are arranged to be spaced from the first group of buttons and are located on one side of the first group of buttons adjacent to the first support part (31), wherein the second group of buttons comprises a plurality of second buttons (62) which are arranged to be spaced apart on the top cover (40), and bottom ends of the plurality of second buttons (62) are abutted against the circuit board (50),
wherein
a spacing between the bottom ends of the plurality of first buttons (61) and an edge of the first end of the circuit board (50) is equal to a spacing between the bottom ends of the plurality of second buttons (62) and an edge of the second end of the circuit board (50).

7. A self-powered device (1), comprising:
a triggering structure, wherein the triggering structure comprises a first lever structure, the first lever structure comprises a first support part (31) and a first triggering member (11), the first triggering member (11) comprises a first power part (111), a first resistance part (112) and a first connection part (113), the first power part (111) and the first resistance part (112) are arranged on opposite sides of the first connection part (113) respectively, the first connection part (113) is rotatably connected to the first support part (31) to form a first revolute (110);
a self-generation structure (20) arranged on the first resistance part (112),
wherein when the first power part (111) is driven by an external force to rotate around an axis of the first revolute (110) and towards a side of the first support part (31), the first resistance part (112) is rotated around the axis of the first revolute (110) in a direction opposite to a rotation direction of the first power part (111), in order that the self-generation structure (20) is triggered in a suspended state and generates electrical energy;
a bottom shell (30), wherein the first support part (31) is arranged on an inner wall of the bottom shell (30); and
a top cover (40), wherein the top cover (40) and the bottom shell (30) are enclosed to form a mounting cavity (100), wherein the first triggering member (11) and the self-generation structure (20) are accommodated in the mounting cavity (100),
wherein
a first force-bearing part (1111) is arranged on the first power part (111), the triggering structure further comprises a second lever structure, the second lever structure comprises a second support part (1113) and a second triggering member (12), the second support part (1113) is arranged on the first power part (111) and is located at a one-half position of a power arm of the first force-bearing part (1111), the second triggering member (12) is accommodated in the mounting cavity (100), and the second triggering member (12) comprises a second power part (122), a second resistance part (121) and a second connection part (123), wherein the second power part (122) and the second resistance part (121) are located on opposite sides of the second connection part (123), respectively; a second force-bearing part (1221) is arranged on the second power part (122), the second resistance part (121) is abutted against the top cover (40) or the bottom shell (30) so as to form a pivot point (O), the second connection part (123) is rotatably connected to the second support part (1113) so as to form a second revolute (120), and a power arm of the second force-bearing part (1221) is twice of a resistance arm of the second revolute (120) in length;
an avoidance groove (1112) is further arranged on the first power part (111), wherein the avoidance groove (1112) penetrates through the first power part (111) and is located between the first connection part (113) and the first force-bearing part (1111), and the second support part (1113) is formed on a groove wall of the avoidance groove (1112) adjacent to the first force-bearing part (1111), the second resistance part (121) penetrates through the avoidance groove (1112) and is abutted against the bottom shell (30),
wherein when the second force-bearing part (1221) is driven by an external force to approach towards the first power part (113) around the pivot point (O), the second revolute (120) drives the first power part (113) to rotate around the axis of the first revolute (110) and towards the bottom wall of the bottom shell (30);
a distance of rotation of the first power part (113) driven by the second force-bearing part (1221) is equal to a distance of rotation of the first power part (113) driven by the first force-bearing part (1111) under the same magnitude of external force;
**characterized in that** the self-powered device further comprises:
a circuit board (50), wherein a first end and a second end of the circuit board (50) are abutted against the first force-bearing part (1111) and the second force-bearing part (1221), respectively;
a first group of buttons, wherein the first group of buttons comprises a plurality of first buttons (61) arranged to be spaced apart on the top cover (40), and bottom ends of the plurality of first buttons (61) are abutted against the circuit board (50); and
a second group of buttons arranged to be spaced from the first group of buttons and located on one side of the first group of buttons adjacent to the first support part (31), wherein the second group of buttons comprises a plurality of second buttons (62) arranged to be spaced apart on the top cover (40), and bottom ends of the plurality of second buttons (62) are abutted against the circuit board (50),
wherein
a spacing between the bottom ends of the plurality of first buttons (61) and an edge of the first end of the circuit board (50) is equal to a spacing between the bottom ends of the plurality of second buttons (62) and an edge of the second end of the circuit board (50).

8. The self-powered device (1) according to any one of claims 1-7, wherein the self-generation structure (20) is a piezoelectric power generation structure.

9. The self-powered device (1) according to any one of claims 1-7, wherein the self-generation structure (20) is a magnet generator structure.

## Patentansprüche

1. Energieautarke Vorrichtung (1), umfassend:
eine Auslösestruktur, wobei die Auslösestruktur eine erste Hebelstruktur umfasst, die erste Hebelstruktur einen ersten Auflageteil (31) und ein erstes Auslöseelement (11) umfasst, das erste Auslöseelement (11) einen ersten Kraftteil (111), einen ersten Widerstandsteil (112) und einen ersten Verbindungsteil (113) umfasst, der erste Kraftteil (111) und der erste Widerstandsteil (112) jeweils auf gegenüberliegenden Seiten des ersten Verbindungsteils (113) angeordnet sind, der erste Verbindungsteil (113) drehbar mit dem ersten Auflageteil (31) verbunden ist, sodass er einen ersten Drehpunkt (110) bildet;
eine Eigenerzeugungsstruktur (20), die auf dem ersten Widerstandsteil (112) angeordnet ist;
wobei, wenn der erste Kraftteil (111) durch eine äußere Einwirkung so angetrieben wird, dass er sich um eine Achse des ersten Drehpunkts (110) und zu einer Seite des ersten Auflageteils (31) dreht, der erste Widerstandsteil (112) um die Achse des ersten Drehpunkts (110) in eine Richtung gedreht wird, die einer Drehrichtung des ersten Kraftteils (111) entgegengesetzt ist, so dass die Eigenerzeugungsstruktur (20) in einem Standbyzustand ausgelöst wird und elektrische Energie erzeugt;
ein unteres Gehäuse (30), wobei der erste Auflageteil (31) an einer Innenwand des unteren Gehäuses (30) angeordnet ist; und
eine obere Abdeckung (40), wobei die obere Abdeckung (40) und das untere Gehäuse (30) umschlossen sind, sodass sie einen Montagehohlraum (100) bilden, wobei das erste Auslöseelement (11) und die Eigenerzeugungsstruktur (20) in dem Montagehohlraum (100) untergebracht sind,
**dadurch gekennzeichnet, dass** die energieautarke Vorrichtung (1) ferner Folgendes umfasst:
eine Leiterplatte (50), die auf einer der oberen Abdeckung (40) zugewandten Fläche des ersten Kraftteils (111) angeordnet ist; und
eine erste Gruppe von Tasten, wobei die erste Gruppe von Tasten eine Vielzahl von ersten Tasten (61) umfasst, die Vielzahl von ersten Tasten (61) so angeordnet ist, dass sie auf der oberen Abdeckung (40) beabstandet sind, und die unteren Enden der Vielzahl der ersten Tasten (61) an der Leiterplatte (50) anliegen und in gleichem Abstand zum ersten Verbindungsteil (113) angeordnet sind.

2. Energieautarke Vorrichtung (1) nach Anspruch 1, wobei ein erster lasttragender Teil (1111) an dem ersten Kraftteil (111) angeordnet ist, die Auslösestruktur ferner eine zweite Hebelstruktur umfasst, die zweite Hebelstruktur einen zweiten Auflageteil (1113) und ein zweites Auslöseelement (12) umfasst, der zweite Auflageteil (1113) auf dem ersten Kraftteil (111) angeordnet ist und sich an einer halben Position eines Kraftarms des ersten lasttragenden Teils (1111) befindet, das zweite Auslöseelement (12) in dem Montagehohlraum (100) untergebracht ist, und das zweite Auslöseelement (12) einen zweiten Kraftteil (122), einen zweiten Widerstandsteil (121) und einen zweiten Verbindungsteil (123) umfasst, wobei der zweite Kraftteil (122) und der zweite Widerstandsteil (121) sich jeweils auf gegenüberliegenden Seiten des zweiten Verbindungsteils (123) befinden; ein zweiter lasttragender Teil (1221) auf dem zweiten Kraftteil (122) angeordnet ist, der zweite Widerstandsteil (121) an der oberen Abdeckung (40) oder dem unteren Gehäuse (30) anliegt, so dass ein Anlenkpunkt (O) gebildet wird, der zweite Verbindungsteil (123) drehbar mit dem zweiten Auflageteil (1113) verbunden ist, so dass ein zweiter Drehpunkt (120) gebildet wird, ein Kraftarm des zweiten lasttragenden Teils (1221) doppelt so lang ist wie ein Widerstandsarm des zweiten Drehpunkts (120).

3. Energieautarke Vorrichtung (1) nach Anspruch 2, wobei ferner eine Ausweichnut (1112) auf dem ersten Kraftteil (111) angeordnet ist, wobei die Ausweichnut (1112) den ersten Kraftteil (111) durchdringt und sich zwischen dem ersten Verbindungsteil (113) und dem ersten lasttragenden Teil (1111) befindet, und der zweite Auflageteil (1113) an einer Nutenwand der Ausweichnut (1112) angrenzend an den ersten lasttragenden Teil (1111) ausgebildet ist, der zweite Widerstandsteil (121) an der oberen Abdeckung (40) anliegt, und der zweite Kraftteil (122) so positioniert ist, dass er der Ausweichnut (1112) entspricht;
wobei, wenn der zweite lasttragende Teil (1221) so durch eine äußere Einwirkung angetrieben wird, dass er sich durch Drehung um den Anlenkpunkt (O) einer unteren Wand des unteren Gehäuses (30) nähert, der zweite Drehpunkt (120) den ersten Kraftteil (111) so antreibt, dass er sich um die Achse des ersten Drehpunkts (110) und in Richtung der unteren Wand des unteren Gehäuses (30) dreht;
ein Drehweg des ersten Kraftteils (111), der von dem zweiten lasttragenden Teil (1221) angetrieben wird, gleich einem Drehweg des ersten Kraftteils (111) ist, der von dem ersten lasttragenden Teil (1111) unter einer gleich großen äußeren Einwirkung angetrieben wird.

4. Energieautarke Vorrichtung (1) nach Anspruch 2, wobei ferner eine Ausweichnut (1112) auf dem ersten Kraftteil (111) angeordnet ist, die Ausweichnut (1112) den ersten Kraftteil (111) durchdringt und sich zwischen dem ersten Verbindungsteil (113) und dem ersten lasttragenden Teil (1111) befindet, und der zweite Auflageteil (1113) an einer Nutenwand der Ausweichnut (1112) angrenzend an den ersten lasttragende Teil (1111) ausgebildet ist; der zweite Widerstandsteil (121) an dem ersten Kraftteil (111) und der obere Abdeckung (40) anliegt, der zweite Kraftteil (122) so positioniert ist, dass er der Ausweichnut (1112) entspricht, und ein dritter lasttragender Teil (1211) an dem zweiten Widerstandsteil (121) angeordnet ist;
wobei, wenn der dritte lasttragende Teil (1211) durch eine äußere Einwirkung in Richtung der unteren Wand des unteren Gehäuses (30) angetrieben wird, der zweite Widerstandsteil (121) gegen den ersten Kraftteil (111) gedrückt und um die Achse des ersten Drehpunktes (110) und in Richtung der unteren Wand des unteren Gehäuses (30) gedreht wird; wenn der zweite lasttragende Teil (1221) durch eine äußere Einwirkung so angetrieben wird, dass er sich um den Anlenkpunkt (O) der unteren Wand des unteren Gehäuses (30) nähert, der zweite Drehpunkt (120) den ersten Kraftteil (111) so antreibt, dass er sich um die Achse des ersten Drehpunkts (110) und in Richtung der unteren Wand des unteren Gehäuses (30) dreht;
ein Drehweg des ersten Kraftteils (111), der von dem dritten lasttragenden Teil (1221) angetrieben wird, gleich einem Drehweg des ersten Kraftteils (111) ist, der von dem zweiten lasttragenden Teil (1221) unter der gleich großen äußeren Einwirkung angetrieben wird.

5. Energieautarke Vorrichtung (1) nach Anspruch 2, wobei ferner eine Ausweichnut (1112) auf dem ersten Kraftteil (111) angeordnet ist, wobei die Ausweichnut (1112) den ersten Kraftteil (111) durchdringt und sich zwischen dem ersten Verbindungsteil (113) und dem ersten lasttragenden Teil (1111) befindet, und der zweite Auflageteil (1113) an einer Nutenwand der Ausweichnut (1112) angrenzend an den ersten lasttragenden Teil (1111) ausgebildet ist, der zweite Widerstandsteil (121) die Ausweichnut (1112) durchdringt und an dem unteren Gehäuse (30) anliegt;
wobei wenn der zweite lasttragende Teil (1221) durch eine äußere Einwirkung so angetrieben wird, dass er sich dem Anlenkpunkt (O) des ersten Kraftteils (113) nähert, der zweite Drehpunkt (120) den ersten Kraftteil (113) so antreibt, dass er sich um die Achse des ersten Drehpunkts (110) und in Richtung der unteren Wand des unteren Gehäuses (30) dreht;
ein Drehweg des ersten Kraftteils (113), der von dem zweiten lasttragenden Teil (1221) angetrieben wird, gleich einem Drehweg des ersten Kraftteils (113) ist, der von dem ersten lasttragenden Teil (1111) unter der gleich großen äußeren Einwirkung angetrieben wird.

6. Energieautarke Vorrichtung (1), umfassend:
eine Auslösestruktur, wobei die Auslösestruktur eine erste Hebelstruktur umfasst, die erste Hebelstruktur einen ersten Auflageteil (31) und ein erstes Auslöseelement (11) umfasst, das erste Auslöseelement (11) einen ersten Kraftteil (111), einen ersten Widerstandsteil (112) und einen ersten Verbindungsteil (113) umfasst, der erste Kraftteil (111) und der erste Widerstandsteil (112) jeweils auf gegenüberliegenden Seiten des ersten Verbindungsteils (113) angeordnet sind, der erste Verbindungsteil (113) drehbar mit dem ersten Auflageteil (31) verbunden ist, sodass er einen ersten Drehpunkt (110) bildet;
eine Eigenerzeugungsstruktur (20) auf dem ersten Widerstandsteil (112) angeordnet ist, wobei, wenn der erste Kraftteil (111) durch eine äußere Einwirkung so angetrieben wird, dass er sich um eine Achse des ersten Drehpunkts (110) und zu einer Seite des ersten Auflageteils (31) dreht, der erste Widerstandsteil (112) um die Achse des ersten Drehpunkts (110) in eine Richtung gedreht wird, die einer Drehrichtung des ersten Kraftteils (111) entgegengesetzt ist, so dass die Eigenerzeugungsstruktur (20) in einem Standbyzustand ausgelöst wird und elektrische Energie erzeugt;
ein unteres Gehäuse (30), wobei der erste Auflageteil (31) an einer Innenwand des unteren Gehäuses (30) angeordnet ist; und
eine obere Abdeckung (40), wobei die obere Abdeckung (40) und das untere Gehäuse (30) umschlossen sind, sodass sie einen Montagehohlraum (100) bilden,
wobei das erste Auslöseelement (11) und die Eigenerzeugungsstruktur (20) in dem Montagehohlraum (100) untergebracht sind,
wobei ein erster lasttragender Teil (1111) an dem ersten Kraftteil (111) angeordnet ist, die Auslösestruktur ferner eine zweite Hebelstruktur umfasst, die zweite Hebelstruktur einen zweiten Auflageteil (1113) und ein zweites Auslöseelement (12) umfasst, der zweite Auflageteil (1113) auf dem ersten Kraftteil (111) angeordnet ist und sich an einer halben Position eines Kraftarms des ersten lasttragenden Teils (1111) befindet, das zweite Auslöseelement (12) in dem Montagehohlraum (100) untergebracht ist, und das zweite Auslöseelement (12) einen zweiten Kraftteil (122), einen zweiten Widerstandsteil (121) und einen zweiten Verbindungsteil (123) umfasst, wobei der zweite Kraftteil (122) und der zweite Widerstandsteil (121) sich jeweils auf gegenüberliegenden Seiten des zweiten Verbindungsteils (123) befinden; ein zweiter lasttragender Teil (1221) auf dem zweiten Kraftteil (122) angeordnet ist, der zweite Widerstandsteil (121) an der oberen Abdeckung (40) oder dem unteren Gehäuse (30) anliegt, so dass ein Anlenkpunkt (O) gebildet wird, der zweite Verbindungsteil (123) drehbar mit dem zweiten Auflageteil (1113) verbunden ist, so dass ein zweiter Drehpunkt (120) gebildet wird,
ein Kraftarm des zweiten lasttragenden Teils (1221) doppelt so lang ist wie ein Widerstandsarm des zweiten Drehpunkts (120),
**dadurch gekennzeichnet, dass** die energieautarke Vorrichtung ferner Folgendes umfasst:
eine Leiterplatte (50), die auf einer der oberen Abdeckung (40) zugewandten Fläche des zweiten Auslöseelements (12) angeordnet ist, wobei ein erstes Ende und ein zweites Ende der Leiterplatte (50) an dem dritten lasttragenden Teil (1211) bzw. dem zweiten lasttragenden Teil (1221) anliegen;
eine erste Gruppe von Tasten, wobei die erste Gruppe von Tasten eine Vielzahl von ersten Tasten (61) umfasst, die so angeordnet sind, dass sie auf der oberen Abdeckung (40) beabstandet sind, und
untere Enden der Vielzahl von ersten Tasten (61) an der Leiterplatte (50) anliegen; und
eine zweite Gruppe von Tasten, die so angeordnet sind, dass sie von der ersten Gruppe von Tasten beabstandet sind und sich auf einer Seite der ersten Gruppe von Tasten neben dem ersten Auflageteil (31) befinden, wobei die zweite Gruppe von Tasten eine Vielzahl von zweiten Tasten (62) umfasst, die so angeordnet sind, dass sie auf der oberen Abdeckung (40) beabstandet sind, und untere Enden der Vielzahl von zweiten Tasten (62) an der Leiterplatte (50) anliegen,
wobei ein Abstand zwischen den unteren Enden der Vielzahl von ersten Tasten (61) und einem Rand des ersten Endes der Leiterplatte (50) gleich einem Abstand zwischen den unteren Enden der Vielzahl von zweiten Tasten (62) und einem Rand des zweiten Endes der Leiterplatte (50) ist.

7. Energieautarke Vorrichtung (1), umfassend:
eine Auslösestruktur, wobei die Auslösestruktur eine erste Hebelstruktur umfasst, die erste Hebelstruktur einen ersten Auflageteil (31) und ein erstes Auslöseelement (11) umfasst, das erste Auslöseelement (11) einen ersten Kraftteil (111), einen ersten Widerstandsteil (112) und einen ersten Verbindungsteil (113) umfasst, der erste Kraftteil (111) und der erste Widerstandsteil (112) jeweils auf gegenüberliegenden Seiten des ersten Verbindungsteils (113) angeordnet sind, der erste Verbindungsteil (113) drehbar mit dem ersten Auflageteil (31) verbunden ist, sodass er einen ersten Drehpunkt (110) bildet; eine Eigenerzeugungsstruktur (20) auf dem ersten Widerstandsteil angeordnet ist, wobei, wenn der erste Kraftteil (111) durch eine äußere Einwirkung so angetrieben wird, dass er sich um eine Achse des ersten Drehpunkts (110) und zu einer Seite des ersten Auflageteils (31) dreht, der erste Widerstandsteil (112) um die Achse des ersten Drehpunkts (110) in eine Richtung gedreht wird, die einer Drehrichtung des ersten Kraftteils (111) entgegengesetzt ist, so dass die Eigenerzeugungsstruktur (20) in einem Standbyzustand ausgelöst wird und elektrische Energie erzeugt;
ein unteres Gehäuse (30), wobei der erste Auflageteil (31) an einer Innenwand des unteren Gehäuses (30) angeordnet ist; und
eine obere Abdeckung (40), wobei die obere Abdeckung (40) und das untere Gehäuse (30) umschlossen sind, sodass sie einen Montagehohlraum (100) bilden, wobei das erste Auslöseelement (11) und die Eigenerzeugungsstruktur (20) in dem Montagehohlraum (100) untergebracht sind,
wobei die Struktur ferner eine zweite Hebelstruktur umfasst, die zweite Hebelstruktur einen zweiten Auflageteil (1113) und ein zweites Auslöseelement (12) umfasst, der zweite Auflageteil (1113) auf dem ersten Kraftteil (111) angeordnet ist und sich an einer halben Position eines Kraftarms des ersten lasttragenden Teils (1111) befindet, das zweite Auslöseelement (12) in dem Montagehohlraum (100) untergebracht ist, und das zweite Auslöseelement (12) einen zweiten Kraftteil (122), einen zweiten Widerstandsteil (121) und einen zweiten Verbindungsteil (123) umfasst, wobei der zweite Kraftteil (122) und der zweite Widerstandsteil (121) sich jeweils auf gegenüberliegenden Seiten des zweiten Verbindungsteils (123) befinden; ein zweiter lasttragender Teil (1221) auf dem zweiten Kraftteil (122) angeordnet ist, der zweite Widerstandsteil (121) an der oberen Abdeckung (40) oder dem unteren Gehäuse (30) anliegt, so dass ein Anlenkpunkt (O) gebildet wird, der zweite Verbindungsteil (123) drehbar mit dem zweiten Auflageteil (1113) verbunden ist, so dass ein zweiter Drehpunkt (120) gebildet wird, und ein Kraftarm des zweiten lasttragenden Teils (1221) doppelt so lang ist wie ein Widerstandsarm des zweiten Drehpunkts (120);
ferner eine Ausweichnut (1112) auf dem ersten Kraftteil (111) angeordnet ist, wobei die Ausweichnut (1112) den ersten Kraftteil (111) durchdringt und sich zwischen dem ersten Verbindungsteil (113) und dem ersten lasttragenden Teil (1111) befindet, und der zweite Auflageteil (1113) an einer Nutenwand der Ausweichnut (1112) angrenzend an den ersten lasttragenden Teil (1111) ausgebildet ist, der zweite Widerstandsteil (121) die Ausweichnut (1112) durchdringt und an dem unteren Gehäuse (30) anliegt,
wobei wenn der zweite lasttragende Teil (1221) durch eine äußere Einwirkung so angetrieben wird, dass er sich dem Anlenkpunkt (O) des ersten Kraftteils (113) nähert, der zweite Drehpunkt (120) den ersten Kraftteil (113) so antreibt, dass er sich um die Achse des ersten Drehpunkts (110) und in Richtung der unteren Wand des unteren Gehäuses (30) dreht;
ein Drehweg des ersten Kraftteils (113), der von dem zweiten lasttragenden Teil (1221) angetrieben wird, gleich einem Drehweg des ersten Kraftteils (113) ist, der von dem ersten lasttragenden Teil (1111) unter der gleich großen äußeren Einwirkung angetrieben wird;
**dadurch gekennzeichnet, dass** die energieautarke Vorrichtung ferner Folgendes umfasst:
eine Leiterplatte (50), wobei ein erstes Ende und ein zweites Ende der Leiterplatte (50) an dem ersten lasttragenden Teil (1111) bzw. dem zweiten lasttragenden Teil (1221) anliegen;
eine erste Gruppe von Tasten, wobei die erste Gruppe von Tasten eine Vielzahl von ersten Tasten (61) umfasst, die so angeordnet sind, dass sie auf der oberen Abdeckung (40) beabstandet sind, und untere Enden der Vielzahl von ersten Tasten (61) an der Leiterplatte (50) anliegen; und
eine zweite Gruppe von Tasten so angeordnet ist, dass sie von der ersten Gruppe von Tasten beabstandet ist und sich auf einer Seite der ersten Gruppe von Tasten neben dem ersten Auflageteil (31) befindet, wobei die zweite Gruppe von Tasten eine Vielzahl von zweiten Tasten (62) umfasst, die so angeordnet sind, dass sie auf der oberen Abdeckung (40) beabstandet sind, und untere Enden der Vielzahl von zweiten Tasten (62) an der Leiterplatte (50) anliegen,
wobei ein Abstand zwischen den unteren Enden der Vielzahl von ersten Tasten (61) und einem Rand des ersten Endes der Leiterplatte (50) gleich einem Abstand zwischen den unteren Enden der Vielzahl von zweiten Tasten (62) und einem Rand des zweiten Endes der Leiterplatte (50) ist.

8. Energieautarke Vorrichtung (1) nach einem der Ansprüche 1 bis 7, wobei die Eigenerzeugungsstruktur (20) eine piezoelektrische Stromerzeugungsstruktur ist.

9. Energieautarke Vorrichtung (1) nach einem der Ansprüche 1 bis 7, wobei die Eigenerzeugungsstruktur (20) eine Magneterzeugungsstruktur ist.

## Revendications

1. Un dispositif auto-alimenté (1), comprenant :
une structure de déclenchement, dans laquelle la structure de déclenchement comprend une première structure de levier, la première structure de levier comprend une première partie de support (31) et un premier élément de déclenchement (11), le premier élément de déclenchement (11) comprend une première partie de puissance (111), une première partie de résistance (112) et une première partie de connexion (113), la première partie de puissance (111) et la première partie de résistance (112) sont disposées respectivement sur les côtés opposés de la première partie de connexion (113), la première partie de connexion (113) est reliée de manière rotative à la première partie de support (31) pour former un premier pivot (110) ;
une structure d'autoproduction (20) disposée sur la première partie de résistance (112) ; dans lequel, lorsque la première partie de puissance (111) est entraînée par une force externe pour tourner autour d'un axe du premier pivot (110) et vers un côté de la première partie de support (31), la première partie de résistance (112) est tournée autour de l'axe du premier pivot (110) dans une direction opposée à une direction de rotation de la première partie de puissance (111), afin que la structure d'autoproduction (20) soit déclenchée dans un état suspendu et génère de l'énergie électrique ;
un boîtier inférieur (30), dans lequel la première partie de support (31) est disposée sur une paroi intérieure du boîtier inférieur (30) ; et
un couvercle supérieur (40), dans lequel le couvercle supérieur (40) et le boîtier inférieur (30) sont enfermés pour former une cavité de montage (100), le premier élément de déclenchement (11) et la structure d'autoproduction (20) étant logés dans la cavité de montage (100),
**caractérisé en ce que** le dispositif auto-alimenté (1) comprend en outre :
un circuit imprimé (50) disposé sur une surface de la première partie de puissance (111) faisant face au couvercle supérieur (40) ; et
un premier groupe de boutons, dans lequel le premier groupe de boutons comprend une pluralité de premiers boutons (61), la pluralité de premiers boutons (61) sont disposés de manière à être espacés sur le couvercle supérieur (40), et les extrémités inférieures de la pluralité de premiers boutons (61) sont en butée contre le circuit imprimé (50) et sont espacées d'une distance égale par rapport à la première partie de connexion (113).

2. Le dispositif auto-alimenté (1) selon la revendication 1, dans lequel une première partie portante (1111) est disposée sur la première partie de puissance (111), la structure de déclenchement comprend en outre une deuxième structure de levier, la deuxième structure de levier comprend une deuxième partie de support (1113) et un deuxième élément de déclenchement (12), la deuxième partie de support (1113) est disposée sur la première partie de puissance (111) et est située à une demi position d'un bras de puissance de la première partie de force (1111), le deuxième élément de déclenchement (12) est logé dans la cavité de montage (100), et le deuxième élément de déclenchement (12) comprend une deuxième partie de puissance (122), une deuxième partie de résistance (121) et une deuxième partie de connexion (123), la deuxième partie de puissance (122) et la deuxième partie de résistance (121) étant situées sur les côtés opposés de la deuxième partie de connexion (123), respectivement ; une deuxième partie portante (1221) est disposée sur la deuxième partie de puissance (122), la deuxième partie de résistance (121) est en butée contre le couvercle supérieur (40) ou le boîtier inférieur (30) de manière à former un point de pivot (O), la deuxième partie de connexion (123) est reliée de manière rotative à la deuxième partie de support (1113) de manière à former un deuxième pivot (120), un bras de puissance de la deuxième partie portante (1221) est deux fois plus long qu'un bras de résistance du deuxième pivot (120).

3. Le dispositif auto-alimenté (1) selon la revendication 2, dans lequel une rainure d'évitement (1112) est en outre disposée sur la première partie de puissance (111), la rainure d'évitement (1112) pénétrant à travers la première partie de puissance (111) et étant située entre la première partie de connexion (113) et la première partie portante (1111), et la deuxième partie de support (1113) est formée sur une paroi de la rainure d'évitement (1112) adjacente à la première partie portante (1111), la deuxième partie de résistance (121) est en butée contre le couvercle supérieur (40), et la deuxième partie de puissance (122) est positionnée de manière à correspondre à la rainure d'évitement (1112) ;
dans lequel, lorsque la deuxième partie portante (1221) est entraînée par une force externe à s'approcher de la paroi inférieure du boîtier inférieur (30) en tournant autour du point de pivot (O), le deuxième pivot (120) entraîne la première partie de puissance (112) à tourner autour de l'axe du premier pivot (110) et vers la paroi inférieure du boîtier inférieur (30) ; une distance de rotation de la première partie de puissance (111) entraînée par la deuxième partie portante (1221) est égale à une distance de rotation de la première partie de puissance (111) entraînée par la première partie portante (1111) sous l'effet d'une force extérieure de même ampleur.

4. Le dispositif auto-alimenté (1) selon la revendication 2, dans lequel une rainure d'évitement (1112) est en outre disposée sur la première partie de puissance (111), la rainure d'évitement (1112) pénètre à travers la première partie de puissance (111) et est située entre la première partie de connexion (113) et la première partie portante (1111), et la deuxième partie de support (1113) est formée sur une paroi de la rainure d'évitement (1112) adjacente à la première partie portante (1111) ;
la deuxième partie de résistance (121) est en butée contre la première partie de puissance (111) et le couvercle supérieur (40), la deuxième partie de puissance (122) est positionnée de manière à correspondre à la rainure d'évitement (1112), et une troisième partie portante (1211) est disposée sur la deuxième partie de résistance (121) ;
dans lequel, lorsque la troisième partie portante (1211) est entraînée par une force externe vers la paroi inférieure du boîtier inférieur (30), la deuxième partie de résistance (121) est pressée contre la première partie de puissance (111) et est tournée autour de l'axe du premier pivot (110) et vers la paroi inférieure du boîtier inférieur (30) ;
lorsque la deuxième partie portante (1221) est entraînée par une force externe à s'approcher de la paroi inférieure du boîtier inférieur (30) en tournant autour du point de pivot (O), le deuxième pivot (120) entraîne la première partie de puissance (112) à tourner autour de l'axe du premier pivot (110) et vers la paroi inférieure du boîtier inférieur (30) ; une distance de rotation de la première partie de puissance (111) entraînée par la troisième partie portante (1221) est égale à une distance de rotation de la première partie de puissance (111) entraînée par la deuxième partie portante (1221) sous l'effet d'une force extérieure de même ampleur.

5. Le dispositif auto-alimenté (1) selon la revendication 2, dans lequel une rainure d'évitement (1112) est en outre disposée sur la première partie de puissance (111), la rainure d'évitement (1112) pénétrant à travers la première partie de puissance (111) et étant située entre la première partie de connexion (113) et la première partie portante (1111), et la deuxième partie de support (1113) est formée sur une paroi de la rainure d'évitement (1112) adjacente à la première partie portante (1111), la deuxième partie de résistance (121) pénètre à travers la rainure d'évitement (1112) et est en butée contre le boîtier inférieur (30) ;
dans lequel, lorsque la deuxième partie portante (1221) est entraînée par une force externe à s'approcher vers la première partie de puissance (113) en tournant autour du point de pivot (O), le deuxième pivot (120) entraîne la première partie de puissance (113) à tourner autour de l'axe du premier pivot (110) et vers la paroi inférieure du boîtier inférieur (30) ; une distance de rotation de la première partie de puissance (113) entraînée par la deuxième partie portante (1221) est égale à une distance de rotation de la première partie de puissance (113) entraînée par la première partie portante (1111) sous l'effet d'une force extérieure de même ampleur.

6. Le dispositif auto-alimenté (1), comprenant :
une structure de déclenchement, la structure de déclenchement comprenant une première structure de levier, la première structure de levier comprend une première partie de support (31) et un premier élément de déclenchement (11), le premier élément de déclenchement (11) comprend une première partie de puissance (111), une première partie de résistance (112) et une première partie de connexion (113), la première partie de puissance (111) et la première partie de résistance (112) sont disposées respectivement sur les côtés opposés de la première partie de connexion (113), la première partie de connexion (113) est reliée de manière rotative à la première partie de support (31) afin de former un premier pivot (110) ;
une structure d'autoproduction (20) disposée sur la première partie de résistance (112) ; dans lequel, lorsque la première partie de puissance (111) est entraînée par une force externe à tourner autour d'un axe du premier pivot (110) et vers un côté de la première partie de support (31), la première partie de résistance (112) est tournée autour de l'axe du premier pivot (110) dans une direction opposée à une direction de rotation de la première partie de puissance (111), afin que la structure d'autoproduction (20) soit déclenchée dans un état suspendu et génère de l'énergie électrique ;
un boîtier inférieur (30), dans lequel la première partie de support (31) est disposée sur une paroi intérieure du boîtier inférieur (30) ; et
un couvercle supérieur (40), dans lequel le couvercle supérieur (40) et le boîtier inférieur (30) sont enfermés pour former une cavité de montage (100),
dans lequel le premier élément de déclenchement (11) et la structure d'autoproduction (20) sont logés dans la cavité de montage (100),
dans lequel une première partie portante (1111) est disposée sur la première partie de puissance (111), la structure de déclenchement comprend en outre une deuxième structure de levier, la deuxième structure de levier comprend une deuxième partie de support (1113) et un deuxième élément de déclenchement (12), la deuxième partie de support (1113) est disposée sur la première partie de puissance (111) et est située à une demi position d'un bras de puissance de la première partie portante (1111), le deuxième élément de déclenchement (12) est logé dans la cavité de montage (100), et le deuxième élément de déclenchement (12) comprend une deuxième partie de puissance (122), une deuxième partie de résistance (121) et une deuxième partie de connexion (123), la deuxième partie de puissance (122) et la deuxième partie de résistance (121) étant situées sur les côtés opposés de la deuxième partie de connexion (123), respectivement; une deuxième partie portante (1221) est disposée sur la deuxième partie de puissance (122), la deuxième partie de résistance (121) est en butée contre le couvercle supérieur (40) ou le boîtier inférieur (30) de manière à former un point de pivot (O), la deuxième partie de connexion (123) est reliée de manière rotative à la deuxième partie de support (1113) de manière à former un deuxième pivot (120),
un bras de puissance de la deuxième partie portante (1221) est deux fois plus long qu'un bras de résistance du deuxième pivot (120),
**caractérisé en ce que** le dispositif auto-alimenté comprend en outre :
un circuit imprimé (50) disposé sur une surface du deuxième élément de déclenchement (12) faisant face au couvercle supérieur (40), dans lequel une première extrémité et une deuxième extrémité du circuit imprimé (50) sont respectivement en butée contre la troisième partie portante (1211) et la deuxième partie portante (1221) ;
un premier groupe de boutons, dans lequel le premier groupe de boutons comprend une pluralité de premiers boutons (61) disposés de manière à être espacés sur le couvercle supérieur (40), et
des extrémités inférieures de la pluralité de premiers boutons (61) sont en butée contre le circuit imprimé (50) ; et
un deuxième groupe de boutons disposés de manière à être espacés du premier groupe de boutons et disposés sur un coté du premier groupe de boutons adjacents à la première partie de support (31), dans lequel le deuxième groupe de boutons comprend une pluralité de deuxième boutons (62) disposés de manière à être espacés du couvercle supérieur (40), et des extrémités inférieures des deuxièmes boutons (62) sont en butée contre le circuit imprimé (50),
dans lequel un espace entre les extrémités inférieures de la pluralité de premiers boutons (61) et un bord de la première extrémité du circuit imprimé (50) est égal à un espace entre les extrémités inférieures de la pluralité de deuxièmes boutons (62) et un bord de la deuxième extrémité du circuit imprimé (50).

7. Le dispositif auto-alimenté (1), comprenant :
une structure de déclenchement, la structure de déclenchement comprenant une première structure de levier, la première structure de levier comprend une première partie de support (31) et un premier élément de déclenchement (11), le premier élément de déclenchement (11) comprend une première partie de puissance (111), une première partie de résistance (112) et une première partie de connexion (113), la première partie de puissance (111) et la première partie de résistance (112) sont disposées respectivement sur les côtés opposés de la première partie de connexion (113), la première partie de connexion (113) est reliée de manière rotative à la première partie de support (31) afin de former un premier pivot (110) ;
une structure d'autoproduction (20) disposée sur la première partie de résistance ;
dans lequel, lorsque la première partie de puissance (111) est entraînée par une force externe à tourner autour d'un axe du premier pivot (110) et vers un côté de la première partie de support (31), la première partie de résistance (112) est tournée autour de l'axe du premier pivot (110) dans une direction opposée à une direction de rotation de la première partie de puissance (111), afin que la structure d'autoproduction (20) soit déclenchée dans un état suspendu et génère de l'énergie électrique ;
un boîtier inférieur (30), dans lequel la première partie de support (31) est disposée sur une paroi intérieure du boîtier inférieur (30) ; et
un couvercle supérieur (40), dans lequel le couvercle supérieur (40) et le boîtier inférieur (30) sont enfermés pour former une cavité de montage (100), dans lequel le premier élément de déclenchement (11) et la structure d'autoproduction (20) sont logés dans la cavité de montage (100),
dans lequel la structure comprend en outre une deuxième structure de levier, la deuxième structure de levier comprend une deuxième partie de support (1113) et un deuxième élément de déclenchement (12), la deuxième partie de support (1113) est disposée sur la première partie de puissance (111) et est située à une demi position d'un bras de puissance de la première partie portante (1111), le deuxième élément de déclenchement (12) est logé dans la cavité de montage (100), et le deuxième élément de déclenchement (12) comprend une deuxième partie de puissance (122), une deuxième partie de résistance (121) et une deuxième partie de connexion (123), la deuxième partie de puissance (122) et la deuxième partie de résistance (121) étant situées sur les côtés opposés de la deuxième partie de connexion (123), respectivement; une deuxième partie portante (1221) est disposée sur la deuxième partie de puissance (122), la deuxième partie de résistance (121) est en butée contre le couvercle supérieur (40) ou le boîtier inférieur (30) de manière à former un point de pivot (O), la deuxième partie de connexion (123) est reliée de manière rotative à la deuxième partie de support (1113) de manière à former un deuxième pivot (120), et un bras de puissance de la deuxième partie portante (1221) est deux fois plus long qu'un bras de résistance du deuxième pivot (120),
une rainure d'évitement (1112) est en outre disposée sur la première partie de puissance (111), la rainure d'évitement (1112) pénétrant à travers la première partie de puissance (111) et étant située entre la première partie de connexion (113) et la première partie portante (1111), et la deuxième partie de support (1113) est formée sur une paroi de la rainure d'évitement (1112) adjacente à la première partie portante (1111), la deuxième partie de résistance (121) pénètre à travers la rainure d'évitement (1112) et est en butée contre le boîtier inférieur (30),
dans lequel, lorsque la deuxième partie portante (1221) est entraînée par une force externe à s'approcher de la première partie de puissance (113) en tournant autour du point de pivot (O), le deuxième pivot (120) entraîne la première partie de puissance (113) à tourner autour de l'axe du premier pivot (110) et vers la paroi inférieure du boîtier inférieur (30) ;
une distance de rotation de la première partie de puissance (113) entraînée par la deuxième partie portante (1221) est égale à une distance de rotation de la première partie de puissance (113) entraînée par la première partie portante (1111) sous l'effet d'une force extérieure de même ampleur ;
**caractérisé en ce que** le dispositif auto-alimenté comprend en outre :
un circuit imprimé (50), dans lequel une première extrémité et une deuxième extrémité du circuit imprimé (50) sont respectivement en butée contre la première partie portante (1111) et la deuxième partie portante (1221) ;
un premier groupe de boutons, dans lequel le premier groupe de boutons comprend une pluralité de premiers boutons (61) disposés de manière à être espacés sur le couvercle supérieur (40), et des extrémités inférieures de la pluralité de premiers boutons (61) sont en butée contre le circuit imprimé (50) ; et
un deuxième groupe de boutons disposés de manière à être espacés du premier groupe de boutons et disposés sur un coté du premier groupe de boutons adjacents à la première partie de support (31), dans lequel le deuxième groupe de boutons comprend une pluralité de deuxièmes boutons (62) disposés de manière à être espacés du couvercle supérieur (40), et des extrémités inférieures de la pluralité de deuxièmes boutons (62) sont en butée contre le circuit imprimé (50),
dans lequel un espace entre les extrémités inférieures de la pluralité de premiers boutons (61) et un bord de la première extrémité du circuit imprimé (50) est égal à un espace entre les extrémités inférieures de la pluralité de deuxièmes boutons (62) et un bord de la deuxième extrémité du circuit imprimé (50).

8. Le dispositif auto-alimenté (1) selon l'une des revendications 1 à 7, dans lequel la structure d'autoproduction (20) est une structure de production d'énergie piézoélectrique.

9. Le dispositif auto-alimenté (1) selon l'une des revendications 1 à 7, dans lequel la structure d'autoproduction (20) est une structure génératrice à aimants.
